# EUROPÄISCHE PATENTSCHRIFT

(11) **EP 3 069 050 B1**
(45) Veröffentlichungstag und Bekanntmachung des Hinweises auf die Patenterteilung: **04.03.2020**
(21) Anmeldenummer: 14799138.4
(22) Anmeldetag: 13.11.2014
(51) Int. Cl.: F16H 47/08, F16H 61/56

(54) **LEISTUNGSÜBERTRAGUNGSVORRICHTUNG**
POWER TRANSMISSION DEVICE
DISPOSITIF DE TRANSMISSION DE PUISSANCE

(30) Priorität: 14.11.2013 DE 102013223213; 09.07.2014 DE 102014213295; 13.08.2014 DE 102014216066
(43) Veröffentlichungstag der Anmeldung: 21.09.2016
(73) Patentinhaber: Voith Patent GmbH, 89522 Heidenheim (DE)
(72) Erfinder: KERNCHEN, Reinhard, 74589 Satteldorf (DE); SCHIPS, Rainer, 73479 Ellwangen (DE); GRAF, Hartmut, 73660 Urbach (DE); SCHIRLE, Hans, 74597 Stimpfach (DE); LUDAS, Bernhard, 73434 Aalen (DE)
(86) Internationale Anmeldenummer: PCT/EP2014/074467
(87) Internationale Veröffentlichungsnummer: WO 2015/071349

(56) Entgegenhaltungen:
- EP-A2- 0 833 079
- WO-A1-91/13275
- DE-A1- 1 450 728
- DE-A1- 2 224 636
- US-A- 2 368 279
- US-A- 2 640 680
- US-A- 2 909 034
- US-A- 2 964 976
- US-A- 3 073 182
- US-A- 3 151 457
- US-A- 4 117 745

## Beschreibung

Die Erfindung betrifft eine Leistungsübertragungsvorrichtung mit den Merkmalen aus dem Oberbegriff von Anspruch 1.

Vorrichtungen zur Leistungsübertragung zum Antrieb einer drehzahlvariablen Arbeitsmaschine sind in unterschiedlichen Ausführungen aus dem Stand der Technik vorbekannt. Die Ausführung gemäß DE 34 41 877 A1 besteht aus einem Getriebe mit Planetengetrieben, wobei die Leistung über einen mechanischen und einen hydrodynamischen Leistungszweig übertragen wird. Der hydrodynamische Leistungszweig verläuft über einen hydrodynamischen Wandler in Form eines Gleichlaufwandlers und ist durch den Wandler durch Verstellung der Beschaufelung des Leitrades in seiner Drehzahl regelbar. Dieser wird mit dem mechanisch übertragenen Leistungszweig in einem Planetengetriebe wieder vereint und treibt so die Arbeitsmaschine mit der gewünschten Drehzahl an, obwohl das Antriebsaggregat, welches das Kraftübertragungsaggregat an der Eingangswelle antreibt, mit konstanter Drehzahl läuft. Basierend auf diesem Aufbau beschreibt die DE 10 2008 034 607 einen ähnlichen Aufbau, welcher die Hohlwelle durch parallel zur zentralen Achse des Kraftübertragungsaggregats verlaufende Koppelwellen ersetzt.

Aus der Druckschrift WO2012143123 A1 ist demgegenüber eine Leistungsübertragungsvorrichtung vorbekannt, welche anstelle eines hydrodynamischen Gleichlaufwandlers einen hydrodynamischen Gegenlaufwandler aufweist. Dieser ist zwar hinsichtlich des Wirkungsgrads etwas schlechter als ein Gleichlaufwandler, er erlaubt jedoch einen sehr einfachen und kompakten Aufbau der Vorrichtung. Dabei ist es vorgesehen, dass das erste Element der Planetenträger des Planetengetriebes ist, während das zweite Element das Sonnenrad des Planetengetriebes und das dritte Element das Hohlrad des Planetengetriebes ist. Dieser Aufbau, bei welchem das Hohlrad mit der Ausgangswelle direkt oder über ein weiteres Getriebe, vorzugsweise ein Stirnradgetriebe, verbunden ist und bei welchem der hydrodynamische Leistungszweig über das Sonnenrad eingetragen wird, hat dabei den entscheidenden Vorteil, dass das Planetengetriebe aufgrund der günstigen Drehzahlen sehr kompakt ausgeführt werden kann.

Aus den nachfolgend genannten Druckschriften sind Ausführungen von Leistungsübertragungsvorrichtungen zur Anordnung zwischen einem An- und Abtrieb vorbekannt, welche einen hydrodynamischen Wandler und ein mit diesem gekoppeltes Überlagerungsgetriebe umfassen. Die gattungsgemäße US 3073182 A1 und DE2224636 A1 sind Ausführungen derartiger Leistungsübertragungsvorrichtungen mit Verstellung von Turbinenschaufelbereichen vorbekannt, DE 1450728 A1 offenbart eine Ausführung mit Verstellung von Pumpenschaufeln.

Der hydrodynamische Wandler hat in Leistungsübertragungsvorrichtungen zwischen einer Antriebsmaschine und einer anzutreibenden Maschine, insbesondere Arbeitsmaschine unterschiedliche Anforderungen zu erfüllen. Wesentliche Kriterien sind der erzielbare Wirkungsgrad, das Leistungsaufnahmeverhalten sowie die Änderung des Momentes und der Drehzahl am Abtrieb, d.h. an der Turbine. Bei den bekannten Leistungsübertragungsvorrichtungen werden die Betriebszustände durch eine Einstellung des Leitrads und/oder des Füllungsgrads des hydrodynamischen Wandlers mit Arbeitsmedium beeinflusst. Es hat sich jedoch gezeigt, dass in den vorgenannten Leistungsübertragungsvorrichtungen ohne oder mit Leitradverstellung noch nicht die gewünschten Ergebnisse und der erforderliche Betriebsbereich erzielbar sind.

Der Erfindung liegt die Aufgabe zugrunde, eine Leistungsübertragungsvorrichtung der eingangs genannten Art zur wenigstens mittelbaren Kopplung mit einer Arbeitsmaschine derart weiterzuentwickeln, dass diese es ermöglicht, den Anforderungen an das Zusammenwirken mit einer Arbeitsmaschine in optimaler Weise entsprechen zu können, wobei eine freie Steuerbarkeit und/oder Regelbarkeit der Leistungsaufnahme bei gleichzeitig kompakter Bauweise und mit sehr gutem Wirkungsgrad erzielt werden soll.

Die erfindungsgemäße Lösung ist durch die Merkmale des Anspruchs 1 charakterisiert. Vorteilhafte Ausgestaltungen sind in den Unteransprüchen wiedergegeben.

Eine erfindungsgemäße Vorrichtung zur Kraftübertragung von einer mit einem Antriebsaggregat, insbesondere Antriebsaggregat mit konstanter Drehzahl zumindest mittelbar verbundenen Eingangswelle auf eine mit einer Arbeitsmaschine, insbesondere Arbeitsmaschine mit variabler Drehzahl zumindest mittelbar verbundene Ausgangswelle, mit
- einem hydrodynamischen Wandler, umfassend zumindest jeweils ein, eine Beschaufelung aufweisendes Pumpenrad, Turbinenrad und Leitrad, die einen mit Betriebsmedium befüllbaren Arbeitsraum bilden;
- einem zumindest ein Planetengetriebe umfassendes Überlagerungsgetriebe, umfassend die Elemente Hohlrad, Sonnenrad sowie einen Planetenträger mit mehreren Planetenrädern als Elemente des Planetengetriebes, wobei das Pumpenrad und/oder die Eingangswelle mit einem ersten Element des Planetengetriebes gekoppelt ist, ein zweites Element des Planetengetriebes wenigstens mittelbar mit dem zumindest einem Turbinenrad gekoppelt ist und die Ausgangswelle mit einem dritten Element des Planetengetriebes verbunden ist, ist dadurch gekennzeichnet, dass die Beschaufelung des Pumpenrades und/oder Turbinenrades wenigstens eine, über eine Stellvorrichtung betätigbare Stellschaufel und/oder wenigstens eine mehrgliedrige Schaufel mit zumindest einem verstellbaren Schaufelsegment umfasst.

Unter einem hydrodynamischen Wandler wird eine Einrichtung zur Drehzahl-/Drehmomentwandlung verstanden. Diese umfasst mindestens drei, einen mit Betriebsmedium befüllbaren Arbeitsraum bildende Schaufelräder, welche die Strömung eines Betriebsmediums umlenken. Die Schaufelräder können jeweils ein- oder mehrteilig ausgebildet sein.

Die Kopplungen der beschaufelten Teile des Wandlers können insbesondere direkt oder über mit den Elementen des Planetengetriebes gekoppelten/drehfest verbundenen Wellen oder Hohlwellen und/oder unter Zwischenordnung weiterer Übertragungselemente erfolgen.

Gemäß einer besonders vorteilhaften Ausbildung sind am Pumpenrad Stellschaufeln vorgesehen, wodurch ein verbesserter Wirkungsgrad und eine Kennfeldspreizung erzielbar sind.

Die erfindungsgemäße Lösung mit Verstellung zumindest einzelner Stellschaufeln und/oder verstellbarer Schaufelsegmente am Pumpenrad und/oder Turbinenrad bietet den Vorteil der Regelbarkeit der Aufnahmeleistung und einer Vergrößerung des möglichen Betriebsbereiches des Wandlers innerhalb der Leistungsübertragungsvorrichtung.

Der Wandler der erfindungsgemäßen Leistungsübertragungsvorrichtung kann gemäß einer ersten Grundausführung der Leistungsübertragungsvorrichtung als Gleichlaufwandler ausgeführt sein. In diesem Fall laufen Pumpenrad und Turbinenrad gleichsinnig um.

Die nicht beanspruchte Kopplungsmöglichkeiten mit dem Planetengetriebe ergeben sich wie folgt aus der Zuordnung der einzelnen Komponenten:
a) Das erste Element des Planetengetriebes wird vom Hohlrad, das zweite Element des Planetengetriebes vom Planetenträger und das dritte Element des Planetengetriebes vom Sonnenrad gebildet. Das Turbinenrad ist dann entweder direkt oder über ein Umkehrgetriebe mit dem Planetenträger verbunden.
b) Das erste Element des Planetengetriebes wird vom Hohlrad, das zweite Element des Planetengetriebes vom Sonnenrad und das dritte Element des Planetengetriebes vom Planetenträger gebildet.
c) Das erste Element des Planetengetriebes wird vom Sonnenrad, das zweite Element des Planetengetriebes vom Hohlrad und das dritte Element des Planetengetriebes vom Planetenträger gebildet.
d) Das erste Element des Planetengetriebes wird vom Sonnenrad, das zweite Element des Planetengetriebes vom Planetenträger und das dritte Element des Planetengetriebes vom Hohlrad gebildet.
e) Das erste Element des Planetengetriebes wird vom Planetenträger, das zweite Element des Planetengetriebes vom Hohlrad und das dritte Element des Planetengetriebes vom Sonnenrad gebildet. Beansprucht wird, das erste Element des Planetengetriebes wird vom Planetenträger, das zweite Element des Planetengetriebes vom Sonnenrad und das dritte Element des Planetengetriebes vom Hohlrad gebildet.

In einer zweiten besonders vorteilhaften Grundausführung der Leistungsübertragungsvorrichtung ist der Wandler als Gegenlaufwandler ausgeführt. Es ergeben sich die die gleichen Kopplungsmöglichkeiten mit dem Planetengeriebe wie unter a) bis f) beschreiben. In einer besonders vorteilhaften konstruktiven Ausführung wird das erste Element des Planetengetriebes vom Planetenträger, das zweite Element des Planetengetriebes vom Sonnenrad und das dritte Element des Planetengetriebes vom Hohlrad des Planetengetriebes gebildet. Der Einsatz eines Gegenlaufwandlers erlaubt aufgrund seines konstruktiven Aufbaus einen sehr einfachen und kompakten Aufbau der Leistungsübertragungsvorrichtung selbst und der baulichen Integration der Stellvorrichtung.

Der Aufbau, bei welchem das Hohlrad mit der Ausgangswelle direkt oder über ein weiteres Getriebe, vorzugsweise ein Stirnradgetriebe, verbunden ist und bei welchem der hydrodynamische Leistungszweig über das Sonnenrad eingetragen wird, hat dabei den entscheidenden Vorteil, dass das Planetengetriebe aufgrund der günstigen Drehzahlen sehr kompakt ausgeführt werden kann. Die Vorrichtung erhält so insgesamt einen sehr kompakten Aufbau, welcher auf eine Koppelhülse verzichten kann. Er kann außerdem auf zusätzliche Standgetriebe in Form von Planetengetrieben verzichten und kann so sehr klein, kompakt mit einer geringen Anzahl von Bauteilen und dementsprechend einfach und kostengünstig in der Herstellung und der Montage ausgeführt werden. Der Aufbau kann dabei gemäß einer vorteilhaften Weiterbildung mit genau einem Planetengetriebe ausgeführt sein, sodass auf weitere vergleichsweise aufwändige Planetengetriebe verzichtet werden kann.

Gemäß der erfindungsgemäßen Vorrichtung ist es ferner vorgesehen, dass die Turbine des hydrodynamischen Gegenlaufwandlers über eine Hohlwelle mit dem Sonnenrad des Planetengetriebes verbunden ist und die durch die Hohlwelle verlaufende Eingangswelle auf der dem hydrodynamischen Gegenlaufwandler abgewandten Seite mit den Planetenträgern verbunden ist. Dies ermöglicht einen sehr kompakten Aufbau, welcher sich sehr platzsparend realisieren lässt. Die Hohlwelle gemäß diesem Aufbau ist dabei von vergleichsweise kleinem Durchmesser und bei weitem nicht so aufwendig und komplex, wie es beispielsweise die Koppelhülse beim Aufbau gemäß dem Stand der Technik ist. Bezüglich der Verstellbarkeit der Stellschaufeln und/oder der verstellbaren Schaufelsegmente besteht eine Mehrzahl von Möglichkeiten. Die einzelnen Verstellvarianten sind dabei durch zumindest eine der nachfolgenden Parameter beschreibbar und ggf. unterscheidbar:
- Art der Erzeugung der Verstellkraft/Verstellmoment
- Einleitung der Verstellkraft/Verstellmoment, insbesondere Richtung
- Art der Ansteuerung der Stellschaufeln und/oder verstellbaren Schaufelsegmente
   Grundsätzlich kann zwischen der axialen Verstellung der Stellschaufeln (insbesondere parallel zur Rotationsachse des Pumpenrades und/oder Turbinenrades) und/oder verstellbaren Schaufelsegmente und der Verdrehung um eine theoretische Drehachse unterschieden werden. Die Begriffe "Drehachse" und "Rotationsachse" sind funktional zu verstehen und sind nicht auf eine konkrete konstruktive Ausführung beschränkt. Die diese realisierenden Komponenten können für die Drehachse der Schaufeln von Zapfen, Bolzen oder anderen rotationssymmetrischen Bauteilen gebildet werden. Die die Rotationsachse des Pumpenrades und/oder des Turbinenrades realisierenden Komponenten können vom Pumpenrad selbst, einer mit dem Pumpenrad drehfest verbundenen Komponente in Form einer Welle, Hohlwelle oder anderem rotationssymmetrischen Bauteil gebildet werden.

Konstruktiv umfasst die Stellvorrichtung einen Stellantrieb, der über einen Übertragungsmechanismus mit der Stellschaufel und/oder wenigstens einem verstellbaren Schaufelsegment einer mehrgliedrigen Schaufel verbunden ist, wobei die über den Stellantrieb aufgebrachte Verstellkraft gemäß einer der nachfolgenden Möglichkeiten oder einer Kombination aus diesen in den Übertragungsmechanismus eingeleitet wird:
- in axialer Richtung bezogen auf die Rotationsachse des Pumpenrades oder Turbinenrades
- in Umfangsrichtung um die Rotationsachse des Pumpenrades oder Turbinenrades..

Gemäß der ersten Grundvariante umfasst das Pumpenrad oder Turbinenrad dazu eine Pumpenrad- bzw. Turbinenradschale. Die wenigstens eine Stellschaufel und/oder wenigstens ein verstellbares Schaufelsegment einer mehrgliedrigen Schaufel ist parallel zur Drehachse des Pumpenrades oder Turbinenrades in axialer Richtung verschiebbar in der Schaufelradschale gelagert. Diese Ausführung bietet den Vorteil der Entfernbarkeit zumindest einzelner oder aller Schaufeln oder von Schaufelsegmenten aus dem Arbeitskreislauf.

Demgegenüber ist eine zweite Grundvariante dadurch charakterisiert, dass das Pumpen- oder Turbinenrad eine Schaufelradschale umfasst und die wenigstens eine Stellschaufel und/oder wenigstens ein verstellbares Schaufelsegment einer mehrgliedrigen Schaufel drehbar um eine theoretische Achse in der Schaufelradschale gelagert ist. Bei diesen Verdrehschaufeln beziehungsweise verdrehbaren Schaufelsegmenten ist deren Winkellage gegenüber einer durch die Erstreckung in radialer Richtung beschreibbaren Ausgangslage durch Verdrehen um eine definierte Drehachse veränderbar. Die Ausgangslage beschreibt eine erste Funktionsstellung, jede weitere aus dieser ausgelenkten Lage eine weitere Funktionsstellung. Die Drehachse kann gemäß einer besonders vorteilhaften Ausbildung in der Schaufelebene aber auch außerhalb dieser liegen. Diese Art der Verstellbarkeit bietet den Vorteil der freien Einstellbarkeit von Anströmbedingungen am Pumpenrad oder Turbinenrad.

Die Stellvorrichtung bei beiden Grundausführungen ist vorzugsweise außerhalb des Arbeitsraumes und in axialer Richtung neben dem jeweiligen Schaufelrad - Pumpenrad und/oder Turbinenrad -angeordnet. Dies bietet den Vorteil einer einfachen Zugängigkeit und insbesondere bei einem Gegenlaufwandler und hydraulischer Erzeugung der Stellkraft eine hinsichtlich der Erzeugungsart der erforderlichen Stellkraft auch eine einfache Anbindung an eine Drucksenke/Druckquelle.

Der Stellantrieb ist in einer Weiterbildung als ein Stellantrieb oder eine Kombination aus der nachfolgend genannten Gruppe von Stellantrieben ausgeführt:
- mechanischer Stellantrieb
- hydraulischer Stellantrieb
- pneumatischer Stellantrieb
- elektronischer Stellantrieb

Vorzugsweise werden hydraulische Stellantriebe verwendet, da diese auch in einfacher Art und Weise über das Betriebsmittelversorgungssystem des Wandlers versorgt und in dieses integriert werden können und somit eine aufwendige Bereitstellung einer eigenen Druckmittelquelle/Druckmittelsenke entfallen kann.

Bezüglich der konstruktiven Ausbildung der Stellantriebe und der Übertragungsmechanismen besteht eine Mehrzahl von Möglichkeiten. Die Ausgestaltung des Übertragungsmechanismus hängt dabei im Wesentlichen auch von der Ausbildung des Stellantriebes und der Art der Verstellung - axial oder Verdrehung - der Stellschaufeln ab.

In einer besonders vorteilhaften Ausbildung einer Stellvorrichtung mit Einleitung der Verstellkraft in Umfangsrichtung um die Rotationsachse weist der Stellantrieb Ringelemente auf, die jeweils koaxial zur Rotationsachse des Pumpenrades angeordnet sind, wobei ein erstes Ringelement mit der wenigstens einen Stellschaufel und/oder dem wenigstens einem verstellbaren Schaufelsegment zur Übertragung einer Stellkraft oder eines Stellmomentes durch den Übertragungsmechanismus verbunden ist und das erste Ringelement relativ zu einem zweiten Ringelement in Umfangsrichtung der Antriebswelle verdrehbar ist. Das erste und zweite Ringelement bilden dabei in besonders vorteilhafter Weise wenigstens zwei in Umfangsrichtung der Antriebswelle angeordnete Druckkammern, die für die Relativdrehung zwischen dem ersten und zweiten Ringelement jeweils mit Druck beaufschlagbar sind. Über die Einstellung der Druckverhältnisse in den gegeneinander wirkenden Druckkammern ist eine besonders feinfühlige Verdrehung der Stellschaufeln und/oder der verstellbaren Schaufelsegmente möglich.

Der Übertragungsmechanismus weist in diesem Fall vorzugsweise einen Verstellring auf, der koaxial zur Antriebswelle angeordnet und drehfest mit dem ersten Ringelement verbunden ist, wobei der Verstellring mit der wenigstens einen Stellschaufel und/oder verstellbaren Schaufelsegment zur Übertragung einer Stellkraft oder eines Stellmomentes gekoppelt ist. Der Verstellring kann gemäß einer der nachfolgend genannten Möglichkeiten ausgebildet sein:
- der Verstellring weist wenigstens einen Nocken auf, der mit einem Kurbeltrieb, insbesondere einem radial angeordneten Hebelelement, zusammenwirkt, wobei der Kurbeltrieb mit der Stellschaufel gekoppelt ist
- der Verstellring weist eine Außenverzahnung auf, die mit der Außenverzahnung eines Zapfens der Stellschaufel kämmt, der sich parallel zur Mittelachse des Verstellringes erstreckt.

Beide Möglichkeiten bieten den Vorteil, dass keine Kraftumlenkung erforderlich ist und die Stellvorrichtung sehr kompakt gestaltbar ist, vorzugsweise Stellantrieb und Übertragungsmechanismus auch in einer axialen Ebene angeordnet sein können.

In einer besonders kompakten Bauweise werden Stellantrieb und Übertragungsmechanismus von einer Baueinheit gebildet.

Erfolgt mit einer alternativen Ausbildung der Stellvorrichtung eine Einleitung der Verstellkraft parallel zur Rotationsachse des Pumpenrades in den Übertragungsmechanismus, weist der Stellantrieb zumindest einen in axialer Richtung bewegbaren Stellkolben auf, der koaxial oder exzentrisch zur Rotationsachse des Pumpenrades angeordnet sind, wobei der Stellkolben mit der wenigstens einen Stellschaufel und/oder dem wenigstens einen verstellbaren Schaufelsegment zur Übertragung einer Stellkraft oder eines Stellmomentes durch den Übertragungsmechanismus verbunden ist und gegenüber dem Pumpenrad in axialer Richtung verschiebbar ist.

Der Übertragungsmechanismus kann in diesem Fall beispielsweise von einem mit dem Stellkolben gekoppelten oder einteilig ausgeführten Verstellring gebildet werden.

Für alle vorgenannten und nauch noch weiter unten beschreibenen Verstellvorrichtungen gilt, dass die einzelnen Stellschaufeln und/oder verstellbaren Schaufelsegmente durch diese Maßnahmen entweder einzeln und/oder in Gruppen und/oder gemeinsam angesteuert werden. Letztere Möglichkeit bietet den Vorteil eines relativ geringen konstruktiven und steuerungstechnischen Aufwandes, während erstgenannte Möglichkeit eine sehr genaue und feinfühlige Verstellung ermöglicht. Als Einrichtungen zur Steuerung sind beispielsweise Ventileinrichtungen denkbar.

Zusätzlich kann bei allen Ausführungen auch das Leitrad verstellbar ausgebildet sein, insbesondere Verstellschaufeln oder zumindest ein verstellbares Schaufelsegment umfassen.

Die erfindungsgemäße Leistungsübertragungsvorrichtung ist insbesondere für den Einsatz in Antriebssträngen zwischen einer Antriebsmaschine, welche mit konstanter Drehzahl betreibbar ist, insbesondere Elektromotor oder Turbine (z.B. Gas- oder Dampfturbine) und einer drehzahlvariablen Arbeitsmaschine einsetzbar, da durch die Verstellbarkeit die Anordnung in optimaler Weise an die Erfordernisse dieses Einsatzfalles anpassbar ist.

Eine besonders vorteilhafte und nachfolgend beschriebene Ausbildung einer Stell- bzw. Verstellvorrichtung mit Einleitung der Verstellkraft parallel zur Rotationsachse des Pumpenrades weist eine Hülse, einen Außenzylinder und ein axial bewegliches Schiebeelement auf, die jeweils koaxial zur Antriebswelle angeordnet sind. Das Schiebeelement verbindet dabei die Hülse und den Außenzylinder derart, dass die Hülse durch eine Axialbewegung des Schiebeelements relativ zum Außenzylinder in Umfangrichtung der Antriebswelle verdrehbar ist. Die Hülse ist mit der wenigstens einen Stellschaufel zur Übertragung einer Stellkraft oder eines Stellmomentes, insbesondere durch eine Umlenkeinrichtung, verbunden. Dies hat den Vorteil, dass nur wenig verschleißbehaftete, mechanische Bauteile erforderlich sind, um eine Stellkraft oder ein Stellmoment zu erzeugen. Dies wird allgemein dadurch erreicht, dass die Stellmomenterzeugung im Wesentlichen durch eine überlagerte translatorische/rotatorische Bewegung des Schiebeelements erfolgt. Konkret wird dies dabei dadurch erreicht, dass eine Hülse, ein Außenzylinder und ein Schiebeelement vorgesehen sind, die die Stellvorrichtung bilden. Die Hülse und der Außenzylinder sind in Umfangsrichtung der Antriebswelle relativ zueinander verdrehbar. Das Schiebeelement führt bei Aktivierung der Stellvorrichtung eine überlagerte translatorisch/rotatorische Bewegung aus. Die translatorische Bewegung des Schiebeelements stellt eine axiale Verschiebung des Schiebeelements entlang der Antriebswelle dar, wobei das Schiebeelement gleichzeitig auch um diese rotiert. Durch diese überlagerte translatorisch / rotatorische Bewegung des Schiebeelements wird die relative Verdrehung zwischen Hülse und Außenzylinder erzeugt. Die Hülse ist durch die Umlenkeinrichtung mit der Stellschaufel gekoppelt. Das durch die Relativdrehung der Hülse bezogen auf den Außenzylinder erzeugte Stellmoment bzw. die Stellkraft wird durch die Umlenkeinrichtung in die Stellschaufel eingeleitet und bringt diese in die angestrebte Stellposition.

Die Hülse, das Schiebeelement und der Außenzylinder sind jeweils koaxial zur Antriebswelle angeordnet, was zu einem kompakten Aufbau der Stellvorrichtung führt. Die Hülse ist vorzugsweise indirekt durch das Schiebelement hydraulisch verdrehbar.

Um die Stellkraft bei dieser alternativen Ausbildung der Stellvorrichtung möglichst effektiv und auf kurzem Weg in eine Verdrehbewegung der Stellschaufel umzuwandeln ist dem Schiebeelement eine Einrichtung zum Aufbringen einer Stellkraft zugeordnet, wobei die jeweilige Verbindung zwischen dem Schiebelement und dem Außenzylinder und dem Schiebelement und der Hülse derart ausgebildet und angeordnet werden, dass sich die Wirkungen der Verbindungen bei Übertragung einer Stellkraft überlagern, wobei die einzelne Verbindung zwischen Schiebeelement und Außenzylinder und/oder Schiebeelement und Hülse jeweils direkt oder über weitere Zwischenelemente erfolgt.

Vorzugsweise ist die Verbindung zwischen Schiebeelement und Außenzylinder und die Verbindung zwischen Schiebeelement und Hülse jeweils als Verzahnung, insbesondere Gewinde ausgebildet.

Gemäß einer ersten Variante der Verbindungen ist dabei jeweils eine der Verbindungen des Schiebelementes mit den Anschlusskomponenten - die Verbindung zwischen Schiebeelement und Außenzylinder oder die die Verbindung zwischen Schiebeelement und Hülse - als Gewinde ausgeführt und die jeweils andere Verbindung - Verbindung zwischen Schiebeelement und Hülse oder Verbindung zwischen Schiebeelement und Außenzylinder - als Geradverzahnung mit einer Ausrichtung der Zahnflanken parallel zur Rotationsachse des Wandlers.

In einer besonders vorteilhaften zweiten Variante ist jeweils eine der Verbindungen des Schiebelementes mit den Anschlusskomponenten - die Verbindung zwischen Schiebeelement und Außenzylinder oder die die Verbindung zwischen Schiebeelement und Hülse - als Gewinde ausgeführt ist und die jeweils andere Verbindung - Verbindung zwischen Schiebeelement und Hülse oder Verbindung zwischen Schiebeelement und Außenzylinder - als Schrägverzahnung mit einer Ausrichtung der Zahnflanken in einem Winkel zur Rotationsachse des Wandlers. Dabei sind Gewinde und Schrägverzahnung durch eine gemeinsame Grundrichtungskomponente charakterisiert. Durch die Wahl der Steigung kann die bei Axialbewegung aufgrund der Verbindung mit dem Außenzylinder erfolgende Verdrehbewegung des Schiebelementes entweder analog oder mit Übersetzung auf die Hülse übertragen werden. In einer besonders vorteilhaften Ausbildung sind beide, d.h. die Verbindung zwischen Schiebeelement und Außenzylinder und die Verbindung zwischen Schiebeelement und Hülse - als Schrägverzahnung mit einer Ausrichtung der Zahnflanken in einem Winkel zur Rotationsachse des Wandlers ausgeführt. Die Ausführung als Schrägverzahnung ist besonders einfach herstellbar.

Die koaxiale Anordnung der Hülse, des Schiebeelements und des Außenzylinders zur Antriebswelle ermöglicht einen einfachen und kompakten Aufbau der Stellvorrichtung und somit des Wandlers, wodurch sowohl der konstruktive Aufwand als auch das Verschleißrisiko verringert wird.

Bei einer bevorzugten Variante dieser zweiten alternativen Ausbildung der Stellvorrichtung ist der Außenzylinder drehfest mit der Antriebswelle verbunden und nimmt das Schiebeelement und die Hülse bei einer Drehung der Antriebswelle mit. Diese Ausführungsform ist besonders für die Verstellung der Pumpenschaufel geeignet, weil die Hülse, das Schiebeelement und der Außenzylinder mit derselben Drehzahl rotieren, wie das Pumpenrad. Durch eine Einstellung der Winkellage zwischen der Hülse und dem Außenzylinder wird die Position der Stellschaufel festgelegt. Da die Hülse, das Schiebeelement und der Außenzylinder mit der Antriebswelle mitdrehen, kommt es bedingt durch die überlagerte translatorisch / rotatorische Verschiebung des Schiebeelements zu einer Relativbewegung in Umfangsrichtung der Antriebswelle zwischen Hülse und Außenzylinder nur während des Verstellvorganges. Vor und nach dem Verstellvorgang findet keine Relativbewegung zwischen der Antriebswelle, der Hülse, dem Schiebeelement und dem Außenzylinder statt, so dass die vorgenannten Elemente zusammen eine rotierende Einheit bilden.

Bei einer weiteren Variante der alternativen Ausbildung der Stellvorrichtung bilden die Hülse und der Außenzylinder zwei in Axialrichtung der Antriebswelle angeordnete Druckkammern, die durch das Schiebeelement voneinander getrennt und jeweils mit Druck beaufschlagbar sind derart, dass das Schiebeelement entlang der Antriebswelle axial verschiebbar ist. Die Betätigung des Schiebeelements erfolgt hydraulisch, insbesondere hydraulisch in beiden Axialrichtungen des Schiebeelements. Damit werden mechanische Stellglieder, wie bspw. Rückstellfedern, vermieden. Die Rückstellung bzw. allgemein die Positionsänderung des Schiebeelements erfolgt hydraulisch. Durch die beiden Druckkammern kann eine axiale Verschiebung des Schiebeelements und damit gekoppelt in Umfangsrichtung der Antriebswelle die Relativbewegung zwischen der Hülse und dem Außenzylinder in beiden Umfangsrichtungen vorgenommen werden. Ein weiterer Vorteil dieser Ausführung ist die stufenlose Verstellbarkeit der Stellschaufel.

Durch Einstellung geeigneter Drücke in den Druckkammern kann eine axiale Position des Schiebeelements und damit verbunden eine Winkellage zwischen Hülse und Außenzylinder und somit ein gewünschter Anstellwinkel der Stellschaufel im Betrieb des Wandlers gehalten werden.

Das Schiebeelement kann allgemein als ein axial verschiebbarer Ringkolben aufgefasst werden, dessen Hub axial entlang der Antriebswelle wirkt.

Bei einer weiteren bevorzugten Variante der zweiten alternativen Ausbildung der Stellvorrichtung weist der Außenzylinder oder die Hülse ein Kopplungselement auf, das mit dem Schiebeelement derart verbunden ist, dass durch die Axialbewegung des Schiebeelements eine Stellkraft oder ein Stellmoment in die Hülse einleitbar ist. Damit wird eine einfache und robuste Ausführung bereitgestellt, mit der die hydraulisch erzeugte Axialbewegung des Schiebeelements eine Stellkraft oder ein Stellmoment in die Hülse einleitet, so dass die Hülse relativ zur Antriebswelle dreht.

Vorzugsweise umfasst das Kopplungselement ein Innengewinde des Außenzylinders, das mit einem Außengewinde des Schiebeelements im Eingriff ist. Hierdurch wird eine translatorische Verschiebung des Schiebeelements relativ zum Außenzylinder ermöglicht, wobei das Schiebeelement durch das Innengewinde des Außenzylinders gedreht wird. Das Innengewinde kann als Muttergewinde verstanden werden.

Die Rotationsbewegung des Außenzylinders, welche die Antriebswelle erzeugt, wird durch das Gewinde auf das Schiebeelement übertragen, so dass dieses vom Außenzylinder mitgenommen wird. Andere Kopplungselemente sind vorstellbar, die einerseits die Übertragung der rotatorische Bewegung des Außenzylinders auf das Schiebeelement und andererseits die überlagerte translatorische / rotatorische Bewegung des Schiebeelements ermöglichen.

Alternativ kann das Kopplungselement ein Außengewinde der Hülse umfassen, das mit einem Innengewinde des Schiebeelements im Eingriff ist. Hierdurch wird eine translatorische Verschiebung des Schiebeelements relativ zur Hülse ermöglicht, wobei die Hülse durch das Gewinde relativ zum Schiebeelement bzw. zur Antriebswelle gedreht wird. Andere Kopplungselemente sind vorstellbar, mit welchen die rotatorische Bewegung der Hülse mit der translatorischen Bewegung des Schiebeelements koppelbar ist.

Darüber hinaus weist das Schiebeelement eine Verzahnung auf, die mit einer komplementären Verzahnung der Hülse oder des Außenzylinders im Eingriff ist.

Vorzugsweise ist die Außenverzahnung der Hülse geradverzahnt oder schrägverzahnt ausgeführt. Die schrägverzahnte Ausführung führt zu einer Steigerung des Drehwinkels, da die Steigung der Verzahnung und die Steigung des Gewindes addiert werden. Beide Ausführungen sind besonders für das Muttergewinde des Außenzylinders geeignet.

Diese komplementäre Verzahnung kann allgemein einen einzelnen Zahn umfassen, der mit der Hülse oder dem Außenzylinder fest verbunden ist und in eine entsprechende Führungsnut im Schiebeelement eingreift. Diese Führungsnut des Schiebeelements überträgt sowohl die rotierende Antriebsbewegung der Antriebswelle, als auch während des Verstellvorgangs die relative Verstellbewegung des Schiebeelements. Durch die Führungsnut kann so der einzelne Zahn während der axialen Verschiebung des Schiebeelements geführt und gleichzeitig in jeder Position des Schiebeelements die Stellkraft bzw. das Stellmoment auf die Hülse übertragen werden. Anstelle eines einzelnen Zahnes kann die Verzahnung mehrere Zähne, bspw. ein Zahnkranzsegment oder einen vollständigen Zahnkranz, umfassen. Die Verzahnung in den im Eingriff befindlichen Bauteilen (Schiebeelement und Hülse bzw. Außenzylinder) ist komplementär ausgebildet.

Alternativ kann der einzelne Zahn auf dem Schiebeelement angeordnet sein und in eine Führungsnut in der Hülse oder des Außenzylinders eingreifen. Anstelle eines einzelnen Zahnes kann die Verzahnung mehrere Zähne, bspw. ein Zahnkranzsegment oder einen vollständigen Zahnkranz, umfassen. Die Verzahnung in den im Eingriff befindlichen Bauteilen (Schiebeelement und Hülse bzw. Außenzylinder) ist komplementär ausgebildet.

Bei der geradverzahnten Ausführung erstreckt sich die Führungsnut parallel zur Mittelachse der Antriebswelle. Bei der schrägverzahnten Ausführung ist die Führungsnut entsprechend angepasst.

Der Außenzylinder kann ein zylinderförmiges Gehäuse bilden, in dem das Schiebeelement und die Hülse angeordnet sind. Damit wird eine besonders kompakte Ausgestaltung der Stellvorrichtung erreicht.

Der Außenzylinder stellt dabei - von der Antriebswelle aus gesehen - die äußere Begrenzung der Druckkammern dar. Die Innenseite der Druckkammern kann sowohl durch die Antriebswelle selbst als auch durch die Hülle begrenzt sein. Dabei bilden beide Druckkammern jeweils einen radialsymmetrischen Druckraum, wobei diese koaxial zur Antriebswelle angeordnet sind. Die beiden Druckkammern sind durch das in axialer Richtung verschiebbare Schiebeelement voneinander getrennt, so dass Druckkammern mit veränderbarem Volumen gebildet werden. Das Schiebeelement bildet dabei jeweils eine Stirnseite der beiden radialsymmetrischen Druckkammern. Die jeweils gegenüberliegende Stirnseite der beiden Druckkammern ist durch den Außenzylinder gebildet.

Durch Beaufschlagung der Druckkammern mit unterschiedlichen Drücken kann das Schiebeelement axial in beide Richtungen entlang der Antriebswelle verschoben werden. Die axiale Verschiebung des Schiebeelements bewirkt durch das Kopplungselement zwischen Außenzylinder und Schiebeelement eine zusätzliche rotatorische Bewegung des Schiebeelements relativ zum Außenzylinder. Diese Relativbewegung in Umfangsrichtung zur Antriebswelle ermöglicht durch die Verzahnung zwischen Schiebeelement und Hülse eine Verstellung der Stellschaufel in verschiedene Richtungen.

Das Schiebeelement und/oder der Außenzylinder und/oder die Hülse können zur Abdichtung der Druckkammern radial angeordnete Dichtelemente aufweisen.

Vorzugsweise sind desweiteren in der Stellvorrichtung gemäß der zweiten alternativen Ausführung, insbesondere im Außenzylinder Bohrungen ausgebildet, die zur Druckbeaufschlagung in die Druckkammern, insbesondere im Bereich des Außendurchmessers münden. Die Ausbildung der Bohrungen im Außenzylinder hat den Vorteil, dass die Zufuhrkanäle in der Antriebswelle gebildet sein können, die mit den im Außenzylinder ausgebildeten Bohrungen fluidverbunden sind. Die Mündung der Bohrungen im Bereich des Außendurchmessers der Druckkammern hat den Vorteil, dass dadurch eine Spülung der Druckkammern erreicht wird. Etwaige am Außendurchmesser anhaftende Verunreinigungen, die sich im Betrieb dort ansammeln, werden durch die Einleitung des Arbeitsmediums im Bereich des Außendurchmessers gelöst bzw. vermieden.
Die Ausbildung der Zuführkanäle in der Antriebswelle kann bspw. durch eine Drehdurchführung erfolgen. Die Drehdurchführung kann bspw. eine Hydraulikhülse sein, in der Kanäle ausgebildet sind, die mit den Bohrungen im Außenzylinder fluidverbunden sind. Die Hydraulikhülse ist drehfest mit der Antriebswelle verbunden.

Bei einer besonders bevorzugten Ausführungsform weist die Umlenkeinrichtung einen Verstellring auf, der koaxial zur Antriebswelle angeordnet und drehfest mit der Hülse verbunden ist. Der Verstellring ist mit der wenigstens einer Stellschaufel zur Übertragung einer Stellkraft oder eines Stellmomentes gekoppelt. Der Verstellring trägt zur kompakten Bauweise des Wandlers bei, da dieser, wie die Stellvorrichtung, koaxial zur Antriebwelle angeordnet ist. Durch die drehfeste Verbindung des Verstellringes mit der Hülse werden etwaige mechanische Koppelbauteile vermieden. Vielmehr wird das für die Verstellung der Verstellschaufel erforderliche Stellmoment direkt von der Hülse in den Verstellring eingeleitet. Die drehfeste Verbindung zwischen dem Verstellring und der Hülse kann beispielsweise durch eine stoffschlüssige Verbindung wie eine Schweißverbindung, oder durch form- oder kraftschlüssige Verbindungen erreicht werden.

Die Kopplung des Verstellrings mit der Stellschaufel kann bei einer weiteren Ausführungsform dadurch erfolgen, dass der Verstellring wenigsten einen Nocken oder wenigstens einen Mitnehmer aufweist, insbesondere einem radial angeordneten Hebelelement und/oder Kurbeltrieb, zusammenwirkt. Das Hebelelement und/oder der Kurbeltrieb ist mit der Stellschaufel gekoppelt. Die Ansteuerung der Stellschaufel durch einen Kurbeltrieb ist an sich bekannt, sodass diesbezüglich auf bereits vorhandene Konstruktionen zurückgegriffen werden kann. Die Ausbildung des Nocken oder Mitnehmers am Verstellring hat gegenüber dem Stand der Technik den Vorteil, dass für die Krafteinleitung in den Kurbeltrieb keine gesonderten mechanischen Bauteile erforderlich sind. Vielmehr wird der Kurbeltrieb direkt durch den Mitnehmer betätigt. Vorzugsweise bildet der Kurbeltrieb ein radial angeordnetes Hebelelement, das die Drehbewegung des Verstellrings in eine überlagerte translatorische /rotatorische Bewegung umwandelt. Durch die Kopplung des Hebelelements mit der Stellschaufel wird in an sich bekannte Weise die Stellbewegung erreicht.

Bei einer alternativen Ausführungsform weist der Verstellring eine Außenverzahnung auf, die mit der Außenverzahnung eines Zapfens der Stellschaufel kämmt. Der Zapfen erstreckt sich parallel zur Mittelachse des Verstellrings. Diese Ausführung hat den Vorteil, dass die rotatorische Bewegung des Verstellrings direkt in eine Drehbewegung der Stellschaufel umgewandelt wird. Damit wird die Anzahl der mechanischen Bauteile weiter reduziert.

Die Stellschaufel kann bei allen Ausführungen eine Verdrehschaufel oder eine mehrgliedrige Schaufel mit wenigstens einem Verdrehsegment umfassen. Verdrehschaufeln und mehrgliedrige Schaufeln sind an sich bekannt, wobei eine Verdrehschaufel eine einteilige Stellschaufel bedeutet, die als Ganzes verstellbar ist. Bei einer mehrgliedrigen Schaufel steht ein Schaufelsegment fest. Wenigstens ein weiteres Schaufelsegment ist verdrehbar. Der Antrieb für das verdrehbare Schaufelsegment wird durch die Stellvorrichtung bewirkt.

Die bevorzugte Ausführung, wonach ein Sensor zur Erfassung der Winkellage zwischen der Hülse und dem Außenzylinder vorgesehen ist, ist besonders geeignet für Systeme, bei denen die Aufnahmeleistung geregelt wird. Dazu wird das vom Sensor ausgegebene Winkelsignal verwendet. Die Stellvorrichtung gemäß der zweiten alternativen Ausbildung weist ein axial bewegliches Schiebeelement, eine Hülse und einen Außenzylinder mit konzentrischer Anordnung auf. Die Hülse ist wenigstens mit einer Stellschaufel des Wandlers zur Übertragung einer Stellkraft oder eines Stellmoments, insbesondere durch eine Umlenkeinrichtung, verbunden. Für die Stellbewegung der Stellschaufel ist die Hülse durch eine Axialbewegung des Schiebeelements relativ zum Außenzylinder in Umfangsrichtung der Antriebswelle verdrehbar. Zu den weiteren Vorteilen einer solchen Stellvorrichtung wird auf die Ausführung im Zusammenhang mit dem hydrodynamischen Wandler verwiesen.

Die erfindungsgemäße Lösung wird nachfolgend anhand von Figuren erläutert. Darin ist im Einzelnen folgendes dargestellt:
- Figur 1: zeigt beispielhaft eine nicht beanspruchte Ausführung einer Leistungsübertragungsvorrichtung mit Gleichlaufwandler;
- Figur 2: zeigt beispielhaft eine Grundausführung einer Leistungsübertragungsvorrichtung mit Gegenlaufwandler;
- Figur 3: zeigt eine Übersicht über mögliche Verstellungsarten;
- Figuren 4a und 4b: verdeutlichen in schematisiert vereinfachter Darstellung Möglichkeiten der Einleitung der Verstellkraft;
- Figuren 5a und 5b: zeigen beispielhaft anhand verschiedener Ansichten eines Wandlers die Möglichkeit einer Pumpenradverstellung als Drehflügelsteller;
- Figuren 6a und 6b: zeigen beispielhaft anhand verschiedener Ansichten eines Wandlers die Möglichkeit einer Pumpenradverstellung mit axialer Einleitung der Verstellkraft.

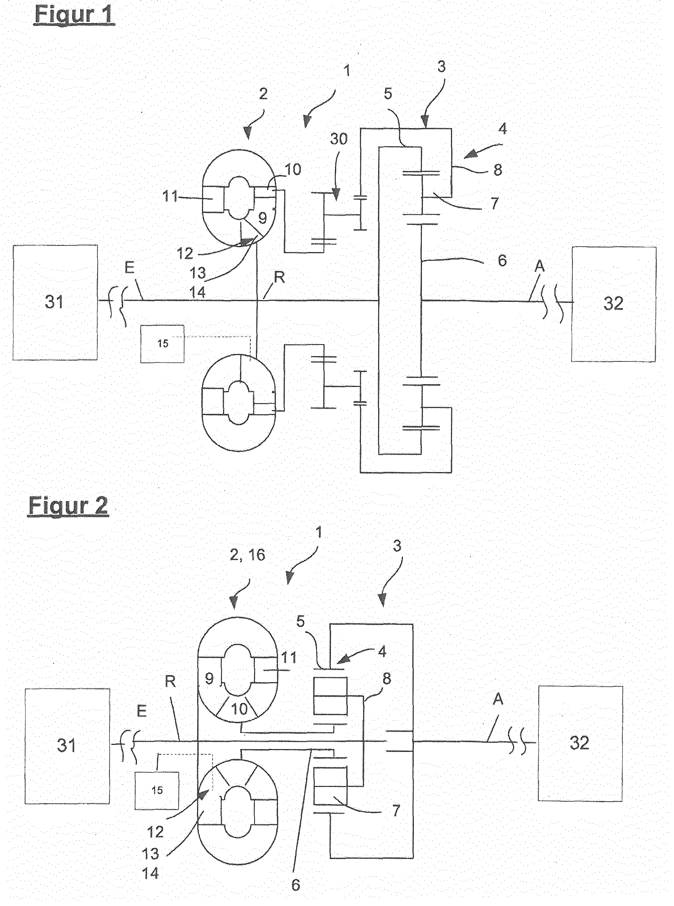

Die Figuren 1 und 2 verdeutlichen in schematisiert vereinfachter Darstellung den Grundaufbau einer ausgeführten Leistungsübertragungsvorrichtung 1 zur Kraftübertragung von einer mit einem Antriebsaggregat 31 wenigstens mittelbar verbundenen Eingangswelle E auf eine mit einem anzutreibenden Aggregat, insbesondere einer Arbeitsmaschine 32 wenigstens mittelbar verbundenen Ausgangswelle A gemäß einer ersten und zweiten Grundausführung in einer vorteilhaften Ausbildung mit Verstellbarkeit der Pumpenradschaufeln. Wenigstens mittelbar bedeutet dabei entweder direkt oder über weitere zwischengeordnete Komponenten, wobei darunter auch Einrichtungen zur Drehzahl-/Drehmomentwandlung fallen können.

Die Leistungsübertragungsvorrichtung 1 umfasst einen hydrodynamischen Drehzahl-/ Drehmomentwandler, nachfolgend kurz hydrodynamischer Wandler 2 genannt, und ein Überlagerungsgetriebe 3, umfassend zumindest ein, in der dargestellten Ausführung genau ein Planetenradgetriebe 4 mit zumindest einem Hohlrad 5, einem Sonnenrad 6 und einem, die Planetenräder 7 tragenden Steg 8. Die Planetenräder 7 sind drehbar am Steg 8 gelagert. Der hydrodynamische Wandler 2 umfasst zumindest ein Pumpenrad 9, ein Turbinenrad 10 und ein Leitrad 11. Andere Ausführungen sind ebenfalls denkbar.

Der Wandler 2 gemäß einer nicht beanspruchte Ausführung ist als einphasiger hydrodynamischer Wandler beziehungsweise Gleichlaufwandler ausgeführt, das heißt, das Pumpenrad 9 und das Turbinenrad 10 laufen gleichsinnig um. Denkbar sind auch einstufige und mehrstufige Ausführungen. Dabei können bei mehrstufiger Ausführung einzelne Hauptglieder des Wandlers 2, welche vom Pumpenrad 9 oder Turbinenrad 10 gebildet werden, aus mehreren Schaufelkränzen bestehen, zwischen denen ein Hauptglied oder ein Schaufelkranz eines anderen Hauptgliedes angeordnet ist.

In der in Figur 1 dargestellten Ausführung ist beispielhaft das Pumpenrad 9 wenigstens mittelbar drehfest mit dem Hohlrad 5 des Planetenradgetriebes 4 gekoppelt, während das Turbinenrad 10 mit dem Steg 8 über eine Umkehrstufe, insbesondere Zwischenrad 30 verbunden ist. Hydrodynamischer Wandler 2 und Planetengetriebe 4 sind koaxial zueinander angeordnet.

Das Pumpenrad 9 weist eine Beschaufelung 12 auf. Diese Beschaufelung ist aus einer Mehrzahl von Schaufeln gebildet. Erfindungsgemäß weist die Beschaufelung 12 wenigstens eine oder eine Mehrzahl von Stellschaufeln 13 und/oder wenigstens eine, vorzugsweise eine Mehrzahl mehrgliedriger Schaufeln mit zumindest einem verstellbaren Schaufelsegment 14 auf. Die Verstellung der Schaufeln 13 und/oder Schaufelsegmente 14 kann unterschiedlich erfolgen. Vorzugsweise ist dem hydrodynamischen Wandler 2 dazu eine Stellvorrichtung 15 zugeordnet. Diese ist hier nur schematisiert angedeutet und hinsichtlich ihrer Funktionsweise gekoppelt mit den verstellbaren Stellschaufeln 13 oder den Schaufelsegmenten 14 wiedergegeben. Bezüglich der konkreten konstruktiven Ausführung besteht eine Mehrzahl von Möglichkeiten.

Die Figur 2 verdeutlicht eine Grundausführung einer erfindungsgemäß ausgebildeten Leistungsübertragungsvorrichtung 1, bei welcher der Wandler 2 als Gegenlaufwandler 16 ausgeführt ist. Auch diese umfasst neben dem Wandler 2 ein Überlagerungsgetriebe 3, umfassend zumindest ein Planetengetriebe 4, hier genau ein Planetengetriebe 4. Hydrodynamischer Wandler 2 und Überlagerungsgetriebe 3 sind auch hier zwischen einer Eingangswelle E, die mit einer Antriebsmaschine wenigstens mittelbar verbindbar ist und einer Ausgangswelle A, die mit einer Arbeitsmaschine wenigstens verbindbar ist, angeordnet. Das Planetengetriebe 4 umfasst in Analogie zur Ausführung von Figur 1 zumindest ein Hohlrad 5, ein Sonnenrad 6, Planetenräder 7 und einen diese tragenden Planetenträger bzw. Steg 8. Der Gegenlaufwandler 16 ist dadurch charakterisiert, dass das Pumpenrad 9 und das Turbinenrad 10 gegensinnig umlaufen. Dabei kann das Turbinenrad 10 in axialer Richtung neben dem Pumpenrad 9 angeordnet sein. Denkbar sind auch Ausführungen mit radialer Anordnung. Desweiteren umfasst der Wandler 2 zumindest ein Leitrad 11. Das Leitrad 11 ist vorzugsweise feststehend, kann jedoch auch drehbar gelagert sein.

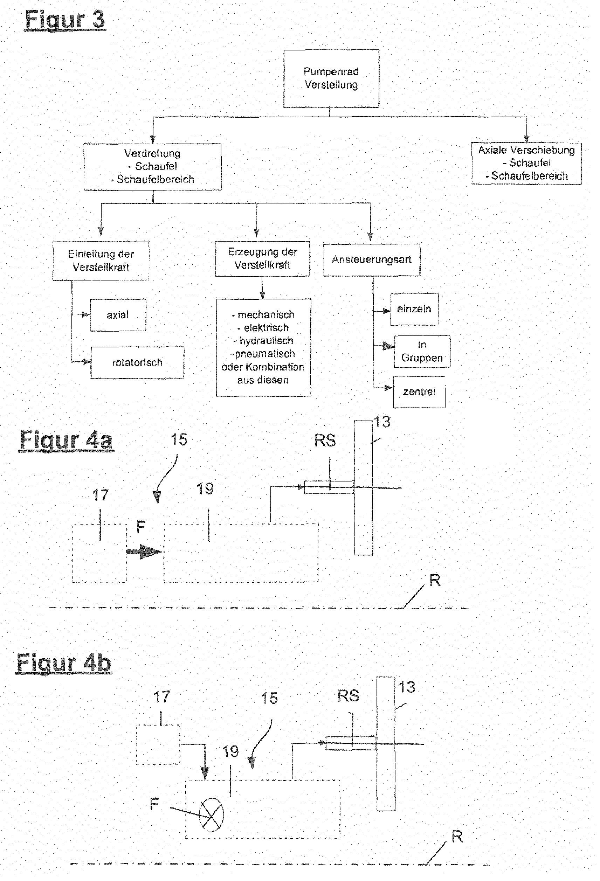

Die Anbindung an das Planetengetriebe 4 erfolgt hier derart, dass das Pumpenrad 9 des hydrodynamischen Wandlers 2 mit dem Steg 8 des Planetengetriebes 4 und dem Eingang E gekoppelt ist, während das Turbinenrad 10 mit dem Sonnenrad 6 des Planetengetriebes wenigstens mittelbar, vorzugsweise direkt gekoppelt ist. Auch hier umfasst die Beschaufelung 12 des Pumpenrades 9 zumindest eine, vorzugsweise eine Mehrzahl Stellschaufeln 13 oder verstellbarer Schaufelsegmente 14. Dazu ist der Beschaufelung 12 des Pumpenrades 9 zumindest eine Stellvorrichtung 15 zur Verstellung der wenigstens einen oder einer Mehrzahl von Schaufeln und / oder einzelner Schaufelbereiche zugeordnet.
Bei der Ausführung als Gegenlaufwandler 16 erfolgt die Anordnung der Stellvorrichtung 15 vorzugsweise außerhalb des von den Schaufelrädern 9, 10, 11 gebildeten Arbeitsraumes und in axialer Richtung betrachtet neben dem Pumpenrad 9. Bezüglich der in für die Ausführung gemäß der Figuren 1 und 2 auszubildenden Stellvorrichtungen 15 besteht eine Vielzahl von Möglichkeiten. Diese können in unterschiedlichster Art und Weise ausgeführt sein und unterscheiden sich hinsichtlich der Umsetzung einer Mehrzahl von Teilfunktionen, zu denen die Art der Erzeugung der Verstellkraft; die Einleitungsrichtung für die Verstellkraft; die Art der Verstellung der einzelnen Stellschaufel oder des verstellbaren Schaufelsegmentes und die Art der Schaufelansteuerung gehören. Diese Möglichkeiten sind beispielhaft in einer Tabelle in Figur 3 wiedergegeben. Dabei kann hinsichtlich der Ansteuerungsart in zentrale Ansteuerung, d.h. Verstellung aller Stellschaufeln und/oder verstellbaren Schaufelsegmente oder aber der Einzel- oder Gruppenansteuerung der Stellschaufeln und/oder verstellbaren Schaufelsegmente unterschieden werden.

Grundlegend kann zwischen zwei Grundarten zur Verstellung einzelner Schaufelbereiche beziehungsweise Schaufelteile oder ganzer Schaufeln unterschieden werden. Die in Figur 3 wiedergegebenen Verstellarten sind für das Pumpenschaufelrad angegeben. Diese gelten auch für eine mögliche vorgesehene Verstellung von beschaufelten Bereichen/Stellschaufeln am Turbinenrad.

Eine erste Grundart besteht in der Ausbildung einzelner Stellschaufeln 13 und/oder einzelner verstellbarer Schaufelbereiche 14 als Verdrehschaufel. Das heißt, die Schaufelverstellung erfolgt durch Drehung um eine der einzelnen Stellschaufel 13 oder des entsprechenden Schaufelsegmentes zugeordnete Drehachse RS. Diese kann mittig oder aber exzentrisch zur Mittenachse einer Schaufel angeordnet sein.

Eine weitere Ausführung gemäß der ersten Grundart besteht in der Ausbildung zumindest einer einzelnen Schaufel mit verformbaren Bereichen.

Eine zweite Grundart besteht in der axialen Verschiebbarkeit einzelner Stellschaufeln 13 oder Schaufelsegmente 14, d.h. der Verschiebbarkeit des Wirkbereiches der einzelnen Schaufeln aus dem Arbeitskreislauf hinaus, vorzugsweise parallel zur Rotationsachse R des Pumpenrades 9.

Eine weitere, hier nicht dargestellte Ausführung gemäß der zweiten Grundart besteht darin, dass zumindest ein Teil der Schaufeln in axialer Richtung länger ausgebildet ist als andere Schaufeln oder alle Schaufeln durch eine verlängerte Ausführung charakterisiert sind, so dass bei Verschiebung in axialer Richtung ein anders profilierter Bereich in den angeströmten Bereich gelangt.

Die einzelnen Stellvorrichtungen 15 können hinsichtlich ihrer Gemeinsamkeiten in Gruppen zusammengefasst werden, wobei jede Gruppe durch die Einleitung der Verstellkraft; insbesondere die Richtung der Einleitung der Verstellkraft und die Art der Erzeugung der Verstellkraft und die Ansteuerung der einzelnen Schaufeln charakterisiert sind. Diese einzelnen Gruppen sind am Beispiel einer tabellarischen Aufstellung in Figur 3 wiedergegeben. Diese können eine Vielzahl einzelner Varianten, die dieser Gruppe zuzuordnen sind umfassen.

Die Stellvorrichtung 15 umfasst einen Stellantrieb 17, der über einen Übertragungsmechanismus 19 mit der Stellschaufel 13 und/oder dem verstellbaren Schaufelsegment 14 verbunden ist.

Bezüglich der Erzeugung der Verstellkraft F selbst besteht eine Vielzahl von Möglichkeiten. Diese kann gemäß einer Möglichkeit der nachfolgend genannten Gruppe oder einer Kombination dieser realisiert werden:
- mechanisch
- hydraulisch
- pneumatisch
- elektrisch

Bei allen Ausführungen ist die Lage des Pumpenrades 9 im Schaufelraum fest vorgegeben. Die Verstellbarkeit einer oder mehrerer Schaufeln oder Schaufelbereiche ist jedoch variabel.

Bei der Ausführung des Wandlers 2 als Gegenlaufwandler 16 ist das Wellenende auf der Antriebsseite zugängig und auf der Abtriebsseite nur bedingt.

Die Figuren 4a und 4b verdeutlichen in schematisiert vereinfachter Darstellung für eine Ausführung einer Schaufel 13 als Verdrehschaufel, welche drehbar in der die Schaufeln aufnehmenden Schale gelagert ist, die beiden Möglichkeiten zur Einleitung der Verstellkraft F.

Die Figur 4a verdeutlicht die axiale Einleitung der Verstellkraft F, d.h. parallel in Richtung zur Drehachse R des Pumpenrades 9. Die Verstellkraft F wird über zumindest einen Übertragungsmechanismus 19 der Stellvorrichtung 15 zur Realisierung einer Richtungsänderung der Kraft auf die Schaufel 13 übertragen. Der Übertragungsmechanismus 17 kann dabei direkt oder über weitere zwischengeordnete Elemente entweder mit einem, die Drehachse RS der Schaufel 13 beschreibenden Bauteil oder einem Schaufelbereich exzentrisch zu dieser zur Erzeugung eines Momentes um die Drehachse RS gekoppelt sein.

Die Figur 4b zeigt demgegenüber schematisiert vereinfacht die rotatorische Einleitung der Verstellkraft F, d.h. in Umfangsrichtung um die Drehachse R des Pumpenrades 9.

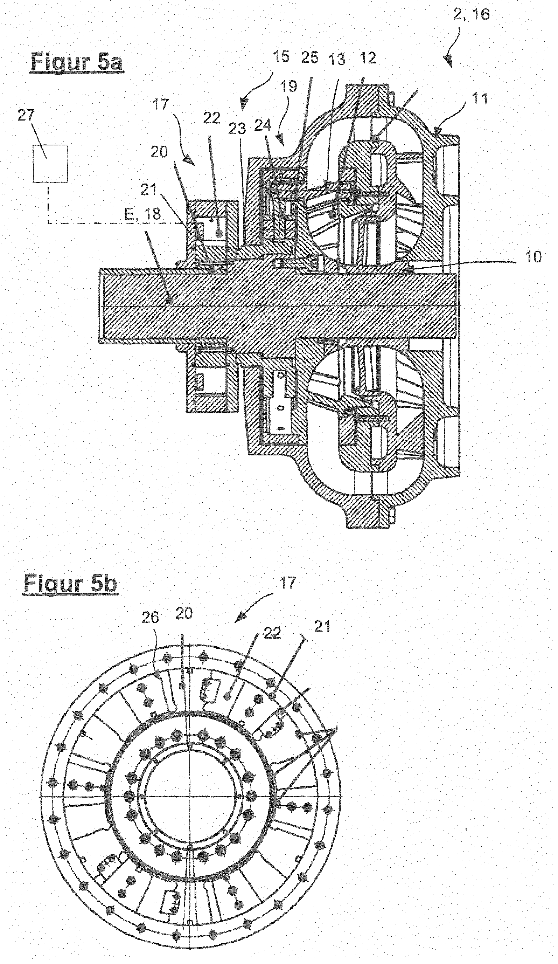

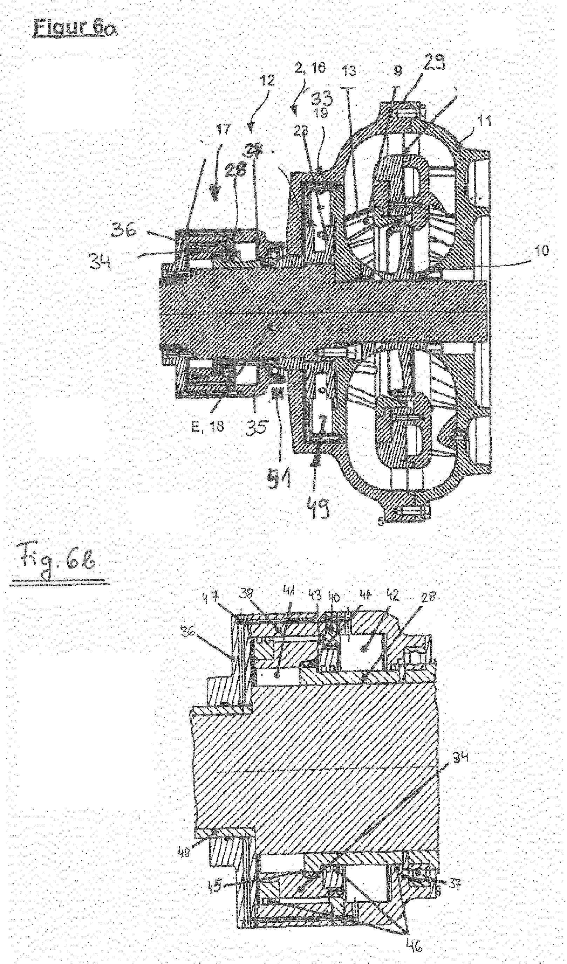

Die Figuren 5 und 6 verdeutlichen vorteilhafte konstruktive Ausführungen möglicher Stellvorrichtungen 15 für Verdrehschaufeln, wobei hier vorzugsweise alle Schaufeln der Beschaufelung eines Pumpenrades 9 in gleicher Weise verstellt werden. Die Verstellung aller mit der Stellvorrichtung 15 gekoppelten Stellschaufeln erfolgt gleichzeitig um den gleichen Verdrehwinkel.

Die einzelne Schaufel 13 einer Beschaufelung 12 des Pumpenrades 9 ist dazu drehbar um eine Drehachse RS gelagert. Die Anordnung der Drehachse RS kann mittig oder exzentrisch bezogen auf die Erstreckung der Schaufel zwischen radial innerem und äußerem Durchmesser des Pumpenrades 9 erfolgen.

Dabei ist die einzelne Schaufel 13 drehfest mit einer auf dieser theoretischen Achse RS liegenden Achse beziehungsweise Zapfen in der Pumpenradschale gelagert. Der Stellantrieb 17 gemäß Figur 5a wird von einem Ringkolben gebildet. Dieser weist Ringelemente 20 und 21 auf, die jeweils koaxial zur Rotationsachse R des Pumpenrades 9 angeordnet sind, wobei ein erstes Ringelement 21 mit der wenigstens einen Stellschaufel 13 und/oder dem wenigstens einem verstellbaren Schaufelsegment 14 zur Übertragung einer Stellkraft oder eines Stellmomentes durch den Übertragungsmechanismus 19 verbunden ist und das erste Ringelement 21 relativ zu einem zweiten Ringelement 20 in Umfangsrichtung der Antriebswelle verdrehbar ist. Das erste und zweite Ringelement 20, 21 bilden wenigstens zwei in Umfangsrichtung der Antriebswelle angeordnete Druckkammern 22, die für die Relativdrehung zwischen dem ersten und zweiten Ringelement 20, 21 jeweils mit Druck beaufschlagbar sind.

Der Übertragungsmechanismus 19 weist einen Verstellring 23 auf, der koaxial zur Antriebswelle 18 beziehungsweise dem Eingang E angeordnet ist und drehfest mit dem ersten Ringelement verbunden ist, wobei der Verstellring 23 mit der wenigstens einen Stellschaufel 13 zur Übertragung einer Stellkraft oder eines Stellmomentes gekoppelt ist und der Verstellring 23 wenigstens einen Nocken aufweist, der mit einem Kurbeltrieb, insbesondere einem radial angeordneten Hebelelement 24, zusammenwirkt, wobei der Kurbeltrieb mit der Stellschaufel 13 gekoppelt ist.

In Figur 5b ist ein Querschnitt der beiden montierten Ringelemente 20, 21 dargestellt, aus dem der Ringraum sowie die darin angeordneten Einbauten ersichtlich ist. Die beiden Ringelemente weisen jeweils radial angeordnete Flügel auf, die durch die Relativdrehung zwischen dem ersten und zweiten Ringelement als Drehflügel fungieren. Zwischen den Flügeln der beiden Ringelemente 20, 21 sind Druckkammern 22, 26 ausgebildet, deren Volumen durch die Stellung der jeweiligen Flügel veränderbar ist. Über die Stellung der Ringelemente 20, 21 zueinander kann die Stellung die Winkellage der Verdrehschaufeln eingestellt werden.

Die Figur 6a zeigt demgegenüber in einem Axialschnitt eine Ausführung mit axialer Verstellkrafteinleitung in den Übertragungsmechanismus 19. Der Stellantrieb umfasst zumindest einen in axialer Richtung verschiebbaren Stellkolben 28, der koaxial oder exzentrisch zur Rotationsachse R des Pumpenrades 9 angeordnet sind, wobei der Stellkolben 28 mit der wenigstens einen Stellschaufel 13 und/oder dem wenigstens einem verstellbaren Schaufelsegment 14 zur Übertragung einer Stellkraft oder eines Stellmomentes durch den Übertragungsmechanismus 19 verbunden ist und gegenüber dem Pumpenrad 9 in axialer Richtung verschiebbar ist. Der Übertragungsmechanismus umfasst einen Verstellring 23 umfasst, der über ein Gewinde mit einem Gewinde des Stellkolbens 28 in Eingriff steht, wobei eine Axialbewegung des Stellkolbens 28 in eine Verdrehbewegung am Verstellring 23 umgesetzt wird. Der Verstellring 23 im vom Stellkolben 28 abgewandten Endbereich mit der Stellschaufel 13, insbesondere einem die Drehachse RS beschreibenden und die Verstellschaufel 13 tragenden Element, beispielsweise einen Kurbeltrieb 49 gekoppelt.

Bei dem in Figur 6a beispielhaft dargestellten Wandler handelt es sich konkret um einen einphasigen Gegenlaufwandler mit einem Pumpenrad 9, einem Turbinenrad 10 und einem Leitrad 11. Bei dem dargestellten Gegenlaufwandler drehen das Pumpenrad 9 und das Turbinenrad 10 gegensinnig. Das Leitrad 11 ist fest mit dem Leitradgehäuse 29 verbunden (einphasiger Wandler). Das Leitrad 11 bildet bei dem Ausführungsbeispiel gemäß Figur 6a ein Umkehrleitrad, das zwischen dem Pumpenrad 9 und dem Turbinenrad 10 angeordnet ist. Die nachfolgende Beschreibung der Verstellung gilt allgemein im Zusammenhang mit einem hydrodynamischen Wandler, d.h. ist auf auch bei mehrstufigen Gegenlaufwandlern oder Gleichlaufwandlern einsetzbar, bei denen das Pumpenrad 9 und das Turbinenrad 10 gleichsinnig umlaufen. Denkbar ist auch, diese Art der Verstellbarkeit bei mehrphasigen hydrodynamischen Wandlern einzusetzen, bei denen ebenfalls wiederrum einstufige oder mehrstufige Bauformen möglich sind.

Konkret weist der in Figur 6a dargestellte Wandler 2 einen Arbeitsraum auf, der von einem Betriebsmedium durchströmbar ist. Der Wandler 2 weist ein Pumpenrad 9 auf, das mit einer Antriebswelle 18 bzw. einer Eingangswelle E verbunden ist, sowie ein Turbinenrad 10, das mit einer Abtriebswelle (nicht dargestellt) verbunden ist. Das Turbinenrad 10 ist relativ drehbar auf der Antriebswelle 18 gelagert. Bei dem Ausführungsbeispiel gemäß Figur 6a ist das Leitradgehäuse 29 mit dem Leitrad 11 ortsfest angeordnet. Das Leitradgehäuse 29 bildet zusammen mit dem Gehäuse des Turbinenrades 10 sowie mit dem Gehäuse des Pumprades 9 einen schalenförmig umschlossenen Arbeitsraum, in dem sich im Betrieb der Strömungskreislauf ausbildet.

Das Pumpenrad 9 ist drehfest mit der Antriebswelle 18 verbunden. Dazu ist eine Wellenschulter in der Antriebswelle 18 ausgebildet, mit der das Pumpenrad 9 hier beispielhaft axial verschraubt sein kann. Andere Wellen-Nabenverbindungen sind möglich.

Das Pumpenrad 9 weist wenigstens eine Stellschaufel 13 auf. Die weiteren Pumpenschaufeln des Pumpenrades 9 können ebenfalls als Stellschaufeln 13 entsprechend ausgebildet sein. Alternativ können die übrigen Pumpenschaufeln starr ausgebildet sein. Der Stellschaufel 13 ist eine Stellvorrichtung 15 zugeordnet, die im Betrieb des Wandlers 2 mit dem Pumpenrad 9 mitrotiert. Die Stellvorrichtung 15 weist eine Umlenkeinrichtung 33 sowie eine, dem Stellkolben entsprechende Hülse 28, ein Schiebeelement 34 und einen Außenzylinder 35 auf. Die Umlenkeinrichtung 33 koppelt die Hülse 28, das Schiebeelement 34 und den Außenzylinder 35 mit der Stellschaufel 13. Die Hülse 28, das Schiebeelement 34 und der Außenzylinder 35 sind jeweils koaxial zur Antriebswelle 18 angeordnet. Die Hülse 28, das Schiebeelement 34 und der Außenzylinder 35 sind konzentrisch angeordnet (siehe auch Figur 6b).

Die Hülse 28 ist relativ zum Außenzylinder 35 bzw. zur Antriebswelle 18 in Umfangsrichtung der Antriebswelle 18 verdrehbar. Durch die Drehbewegungen der Hülse 28 wird die Umlenkeinrichtung 33 betätigt, die die Drehbewegung der Hülse 28 auf die Stellschaufel 13 überträgt und den Anstellwinkel der Stellschaufel 13 ändert.

Konkret ist bei dem Ausführungsbeispiel gemäß Figur 6a der Außenzylinder 35 außen angeordnet und drehfest mit der Antriebswelle 18 verbunden. Dies kann beispielsweise durch eine axiale Verschraubung des Außenzylinders 35 mit einer Wellenschulter der Antriebswelle 18 erfolgen. Der Außenzylinder 35 dreht mit der Antriebswelle 18 mit. Der drehbar gelagerte Außenzylinder 35 bildet ein zylinderförmiges Gehäuse, das das Schiebeelement 34 und die Hülse 28 umschließt. Mit anderen Worten ist das Schiebeelement 34 und die Hülse 28 im Gehäuse des Außenzylinders 35 angeordnet. Dazu weist der Außenzylinder 35 eine in axialer Richtung außen angeordnete erste Stirnwand 36, die direkt auf der Antriebswelle 18 sitzt und mit der Wellenschulter, wie vorstehend beschrieben, verschraubt ist. Außerdem weist der Außenzylinder 35 eine in axialer Richtung innen angeordnete zweite Stirnwand 37 auf, die das Gehäuse in axialer Richtung begrenzen. Das Gehäuse weist einen Außenring 38 auf, der das Gehäuse in radialer Richtung begrenzt und der zwischen den beiden Stirnwänden 36, 37 angeordnet ist. Das Gegenstück zum Außenring 38 bildet der Innenring der Hülse 28. Wie in Figur 6a zu erkennen, übergreifen die beiden Stirnwände 36, 37 den Außenring 38 und Innenring so, dass zwischen dem Außenzylinder 35 und der Hülse 28 zwei Ringräume 41, 42 gebildet sind. Die Ringräume 41, 42 sind axial hintereinander angeordnet und durch das Schiebeelement 34 druckdicht voneinander getrennt. Die Ringräume 41, 42 fungieren als Verstellraum. Die erste Stirnwand 36 bildet eine Dichtfläche zum Außenumfang der Antriebswelle 18.

In Figur 6b ist ein Querschnitt der Hülse 28, des Schiebeelements 34 und des Außenzylinders 35 dargestellt, aus dem der Verstellraum sowie die darin angeordneten Einbauten ersichtlich ist. Der Außenzylinder 35 weist ein Innengewinde 40 auf, das am Innenumfang des Außenzylinders 35 angeordnet ist. Konkret bildet das Innengewinde 40 ein Muttergewinde, das mit dem Außenzylinder 35 verschraubt ist. Das Innengewinde 40 steht mit einem entsprechenden Außengewinde 43 des Schiebelements 34 im Eingriff.
Die Hülse 28 weist eine Außenverzahnung 44 auf, die in eine entsprechende Innenverzahnung 45 des Schiebeelements 34 eingreift.

Mit dieser Anordnung wird durch die überlagerte translatorisch / rotatorische Bewegung des Schiebeelements 34 eine Relativdrehung zwischen dem Außenzylinder 35 und der Hülse 28 erzeugt.

Zwischen der ersten Stirnwand 36 und der zweiten Stirnwand 37 des Außenzylinders 35 sind Druckkammern 41, 42 ausgebildet, die durch das Schiebeelement 34 voneinander getrennt sind. Das Volumen der Druckkammern 41, 42 ist durch die Stellung des Schiebeelements 34 veränderbar. Mit anderen Worten ist der Abstand des Schiebeelements 34 in axialer Richtung durch eine Verschiebung des Schiebeelements 34 veränderbar.

Jeweils die erste Stirnwand 36 des Außenzylinders 35, der Außenzylinder 35, die Hülse 28, die Antriebswelle 18 und das Schiebeelement 34 begrenzen zusammen eine erste Druckkammer 41. Dazu liegt die erste Stirnwand 36 des Außenzylinders 35 an der Antriebswelle 18 und am Außenring 38 des Außenzylinders 35 dichtend an. Dasselbe gilt für Schiebeelement 34 in entsprechender Weise, das am Außenzylinder 35 und an der Hülse 28 dichtend anliegt. Dazu sind Dichtelemente 46 vorgesehen. Insgesamt wird dadurch eine geschlossene Druckkammer 41 gebildet, die in axialer Richtung von der ersten Stirnwand 36 und dem Schiebeelement 34 und in radialer Richtung vom Außenring 38 des Außenzylinders 35 und von der Antriebswelle 18 bzw. Innenring 39 begrenzt ist.

In axialer Richtung der Antriebswelle 18 ist eine weitere Druckkammer 42 ausgebildet, die in entsprechender Weise von der zweiten Stirnwand 37, dem Außenzylinder 35, der Hülse 28 und dem Schiebeelement 34 begrenzt und durch Dichtelemente 46 abgedichtet ist. Mit anderen Worten ist ein Schiebeelement 34 zwischen der ersten Stirnwand 36 und der zweiten Stirnwand 37 des Außenzylinders 25 angeordnet, so dass auf beiden Seiten des Schiebeelements 34 jeweils ein Druckraum 41, 42 ausgebildet ist.

Die Druckkammern 41, 42 sind zur Erzeugung der axialen Verschiebung des Schiebeelements 34 entlang der Antriebswelle 18 zwischen der ersten Stirnwand 36 und der zweiten Stirnwand 37 des Außenzylinders 35 jeweils mit Druck beaufschlagbar. Durch die axiale Verschiebung des Schiebeelements 34 wird gleichzeitig aufgrund der Gewindeverbindung zwischen dem Außenzylinder 35 und dem Schiebeelement 34 eine überlagerte Rotationsbewegung erzeugt, die eine relative Verdrehung der Hülse 28 in Umfangsrichtung der Antriebswelle 18 bewirkt.

Bei dem Ausführungsbeispiel gemäß Figur 6b wird der Druck hydraulisch erzeugt. Bei dem in Figur 6b dargestellten Betriebszustand herrscht in der ersten Druckkammer 41 ein niedrigerer Druck als in der zweiten Druckkammer 42, so dass das Schiebeelement 34 und damit die Hülse 28 im Uhrzeigersinn verdreht werden. Durch eine Änderung der Druckverhältnisse in den beiden Druckkammern 41, 42 ist eine Verstellung der Hülse 28 im Gegenuhrzeigersinn möglich.

In der Detaildarstellung gemäß Figur 6b sind darüber hinaus noch weitere Einzelheiten der Stellvorrichtung 15 zu erkennen. So ist beispielsweise Figur 6b zu entnehmen, dass im Außenzylinder 35 Bohrungen 47 ausgebildet sind, die als Druckkanäle zur Zufuhr der Hydraulikflüssigkeit dienen. Konkret sind die Druckkanäle im Außenzylinder 35 ausgebildet und erstrecken sich durch die erste Stirnwand 36 radial nach außen. Die Bohrungen 47 münden in die jeweiligen Druckkammern 41, 42 im Bereich des Außendurchmessers der Druckkammern 41, 42. Dadurch kann die Hydraulikflüssigkeit über den Außenzylinder 35 radial nach innen in die Druckkammern 41, 42 gepresst werden. Es wird eine Spülwirkung erreicht, mit der eine Anlagerung von Verunreinigungen am Außenring 38 weitgehend verhindert wird.

Die Zufuhrkanäle, die die Bohrungen 47 des Außenzylinders 35 mit einer Zufuhreinrichtung (nicht dargestellt) verbinden, sind direkt in der Antriebswelle 18 oder in einem der Antriebswelle 18 zugeordneten Bauteil, zum Beispiel durch eine Drehdurchführung, ausgebildet. Konkret ist zwischen dem Außenzylinder 35 und der Antriebswelle 18 eine Hydraulikhülse 48 angeordnet, in der die Zufuhrkanäle für die Versorgung der Druckkammern 41, 42 mit Hydraulikflüssigkeit ausgebildet sind. Die Verbindung zwischen dem Außenzylinder 35 und der Hydraulikhülse 48 kann beispielsweise kraftschlüssig erfolgen.

Zur Übertragung der Drehbewegung der Hülse 28 auf die Stellschaufel 13 ist die nachstehend beschriebene Umlenkeinrichtung 33 vorgesehen. Die Umlenkeinrichtung 33 ist drehfest mit der Hülse 28 verbunden. Dadurch ist ein Drehmoment in die Umlenkeinrichtung 33 einleitbar, das auf die Stellschaufel 13 übertragen wird. Die Übertragung durch die Umlenkeinrichtung 33 kann durch eine überlagerte translatorische / rotatorische Bewegung oder durch eine ausschließlich rotatorische Bewegung erfolgen. Das durch die Hülse 28 eingeleitete Drehmoment versetzt die Stellschaufel 13 in eine Drehbewegung, wodurch der Anstellwinkel der Stellschaufel 13 verändert wird.

Konkret weist die Umlenkeinrichtung 33 hierfür einen Verstellring 23 auf, der koaxial angeordnet ist. Der Verstellring 23 sitzt auf dem Außendurchmessers der Antriebswelle 18 und ist relativ zu dieser drehbar. In axialer Richtung ist der Verstellring 23 beispielsweise am Gehäuse des Pumpenrades 9 abgestützt. Dabei ist der Verstellring 23 mit der Hülse 28 drehfest verbunden. Die Verbindung kann beispielsweise stoffschlüssig (Schweißverbindung) oder form- oder kraftschlüssig erfolgen. Denkbar ist auch eine einteilige Ausbildung. Die Wirkung der Verbindung besteht darin, den Verstellring 23 bei einer Drehung der Hülse 28 mitzunehmen. Der Verstellring 23 weist einen Mitnehmer am axial innen angeordneten Ende auf, der mit einem Kurbeltrieb 49 zusammen wirkt. Der Kurbeltrieb 49 ist mit der Stellschaufel 13 gekoppelt. Konkret ist am unteren Ende des Kurbeltriebs 49 ein Bolzen 50 befestigt. Die Drehachse des Bolzens 50 verläuft parallel zur Mittelachse der Antriebswelle 18. Das obere Ende des Kurbeltriebs 49 greift an der Stellschaufel 13, konkret an einem exzentrisch angeordneten Zapfen der Stellschaufel 13 an, der aus dem Gehäuse des Pumpenrades 9 axial hervorsteht.

Der Mitnehmer bildet zusammen mit dem Bolzen ein Drehgelenk, um das der Kurbeltrieb 49 verschwenkbar ist. Die Verschwenkbewegung erfolgt in Umfangsrichtung der Antriebswelle 18. Der Mitnehmer fungiert als Gleitlager, in dem der Bolzen drehbeweglich angeordnet ist. Das vom Verstellring 23 eingeleitete Verstellmoment wird über den Bolzen, der im Mitnehmer des Verstellrings 23 abgestützt wird, auf den Kurbeltrieb 49 übertragen. Der Kurbeltrieb 49 wandelt die rotatorische Bewegung des Verstellrings 23 in eine überlagerte translatorische / rotatorische Bewegung des Kurbeltriebs 49 um, die eine Kippbewegung der Stellschaufel 13 bewirkt, so dass der gewünschte Anstellwinkel der Stellschaufel 13 eingestellt werden kann.

Eine alternative Übertragung der Drehbewegungen der Hülse 28 auf die Stellschaufel 13 kann durch eine Außenverzahnung erfolgen, die am axial inneren Ende des Verstellrings 23 ausgebildet ist. Konkret kann das axial innere Ende des Verstellrings 23 ein Zahnrad oder Zahnradsegment bilden, das mit einer entsprechenden Außenverzahnung eines Zapfens der Stellschaufel 13 kämmt. Der Zapfen erstreckt sich parallel zur Mittelachse des Verstellrings 23. Andere mechanische Kopplungen des Verstellrings 23 mit der Stellschaufel 13 sind möglich. Ebenso kann die Stellschaufel 13 eine Verdrehschaufel bilden, wie in Figur 6a dargestellt, die als Ganzes verdreht wird. Alternativ kann die Schaufel 13 eine mehrgliedrige Schaufel 13 sein, die wenigstens ein verstellbares Verdrehsegment aufweist.

Wie in Figur 6a dargestellt weist der Wandler einen Sensor 51 zur Erfassung der Winkellage zwischen der Hülse 28 und dem Außenzylinder 35 auf. Der Sensor 51 ermöglicht die Regelung der Aufnahmeleistung des Pumpenrades.

Zusammengefasst funktioniert der Wandler gemäß Figur 1 wie folgt:
Zur Verstellung der Beschaufelung des Pumpenrades 9 wird die Stellvorrichtung 15 betätigt. Dazu werden die Druckkammern 41, 42 mit unterschiedlichen Drücken beaufschlagt, so dass das Schiebeelement 34 axial entlang der Antriebswelle 18 verschoben und durch das Innengewinde 40 verdreht wird. Da das Schiebeelement 34 mit der Hülse 28 verzahnt ist, wird die Hülse 28 bezogen auf den Außenzylinder 35 in Umfangsrichtung mechanisch, bzw. wenn man die Betätigung des Schiebeelements 34 mitberücksichtigt, indirekt hydraulisch verdreht. Durch die Drehbewegung der Hülse 28 wird der Verstellring 23 in Umfangsrichtung verdreht, wodurch der Kurbeltrieb 49 betätigt wird. Der Kurbeltrieb 49 wandelt die rotatorische Bewegung des Verstellrings 23 in eine überlagerte translatorische / rotatorische Bewegung um, die eine Kippbewegung der Stellschaufel 13 bewirkt, so dass der gewünschte Anstellwinkel der Stellschaufel 13 eingestellt werden kann. Die Position der Stellschaufel 13 wird durch die Druckverhältnisse in den Druckkammern 41, 42 gehalten.

Die Verzahnungen zwischen Schiebelement und Hülse und Schierbelement und Außenzylinder sind vorzugsweise als Schrägverzahnung zur Überlagerung ihrer Wirkungsweise bei Verdrehung ausgeführt.

Die in den Figuren beschrieben Möglichkeiten der Schaufelverstellung sind für das Pumpenrad beschrieben. Diese können auch für das Turbinenrad zum Einsatz gelangen.

### Bezugszeichen

- 1: Leistungsübertragungsvorrichtung
- 2: hydrodynamischer Drehzahl-/Drehmomentwandler
- 3: Überlagerungsgetriebe
- 4: Planetengetriebe
- 5: Hohlrad
- 6: Sonnenrad
- 7: Planetenräder
- 8: Steg, Planetenträger
- 9: Pumpenrad (Wandler)
- 10: Turbinenrad (Wandler)
- 11: Leitrad
- 12: Beschaufelung
- 13: Verstellschaufel
- 14: Schaufelsegment
- 15: Stellvorrichtung
- 16: Gegenlaufwandler
- 17: Stellantrieb
- 19: Übertragungsmechanismus
- 20: Ringelement
- 21: Ringelement
- 22: Druckkammer
- 23: Verstellring
- 26: Druckkammer
- 24: Hebelelement
- 28: Stellkolben
- 29: Leitradgehäuse
- 30: Zwischenrad
- 31: Antriebsaggregat
- 32: Arbeitsmaschine
- 33: Umlenkeinrichtung
- 34: Schiebeelement
- 35: Außenzylinder
- 36: erste Stirnwand
- 37: zweite Stirnwand
- 38: Außenring
- 39: Innenring
- 40: Innengewinde
- 41: Ringraum
- 42: Ringraum
- 43: Außengewinde
- 44: Außenverzahnung
- 45: Innenverzahnung
- 46: Dichtelement
- 47: Bohrung
- 48: Hydraulikhülse
- 49: Kurbeltrieb
- 50: Bolzen
- 51: Sensor
- A: Ausgangswelle
- E: Eingangswelle
- F: Verstellkraft
- RS: Drehachse
- R: Rotationsachse

## Patentansprüche

1. Vorrichtung zur Kraft-, insbesondere Leistungsübertragung (1) von einer mit einem Antriebsaggregat, insbesondere Antriebsaggregat (31) mit konstanter Drehzahl zumindest mittelbar verbundenen Eingangswelle (E) auf eine mit einer Arbeitsmaschine (32), insbesondere Arbeitsmaschine mit variabler Drehzahl zumindest mittelbar verbundene Ausgangswelle (A), insbesondere Leistungsübertragungsvorrichtung mit
1.2 einem hydrodynamischen Wandler (2), umfassend zumindest jeweils ein, eine Beschaufelung aufweisendes Pumpenrad (9), Turbinenrad (10) und Leitrad (11), die einen mit Betriebsmedium befüllbaren Arbeitsraum bilden;
1.3 einem, zumindest ein Planetengetriebe (4) umfassendes Überlagerungsgetriebe (3), umfassend die Elemente Hohlrad (5), Sonnenrad (6) sowie einen Planetenträger (8) mit mehreren Planetenrädern (7) als Elemente des Planetengetriebes (4), wobei das Pumpenrad (9) und/oder die Eingangswelle (E) mit einem ersten Element des Planetengetriebes (4) gekoppelt ist, ein zweites Element des Planetengetriebes (4) wenigstens mittelbar mit dem zumindest einem Turbinenrad (10) gekoppelt ist und die Ausgangswelle (A) mit einem dritten Element des Planetengetriebes (4) verbunden ist;
die Beschaufelung (12) des Pumpenrades (9) und/oder Turbinenrades (10) wenigstens eine, über eine Stellvorrichtung (15) betätigbare Stellschaufel (13) und/oder wenigstens eine mehrgliedrige Schaufel mit zumindest einem verstellbaren Schaufelsegment (14) umfasst, **dadurch gekennzeichnet, dass** das erste Element des Planetengetriebes (4) vom Planetenträger (8), das zweite Element des Planetengetriebes vom Sonnenrad (6) und das dritte Element des Planetengetriebes vom Hohlrad (5) gebildet werden und
das Turbinenrad (10) über eine Hohlwelle mit dem Sonnenrad (6) verbunden ist und die durch die Hohlwelle verlaufende Eingangswelle (E) auf der dem hydrodynamischen Wandler (2) abgewandten Seite des Planetengetriebes (4) mit dem Planetenträger (8) verbunden ist.

2. Leistungsübertragungsvorrichtung (1) nach Anspruch 1,
**dadurch gekennzeichnet, dass**
das Überlagerungsgetriebe (3) genau ein Planetengetriebe (4) umfasst.

3. Leistungsübertragungsvorrichtung (1) nach einem der Ansprüche 1 oder 2,
**dadurch gekennzeichnet, dass**
der hydrodynamische Wandler (2) als Gleichlaufwandler ausgeführt ist.

4. Leistungsübertragungsvorrichtung (1) nach einem der Ansprüche 1 oder 2,
**dadurch gekennzeichnet, dass**
der hydrodanamische Wandler (2) als Gegenlaufwandler (16) ausgeführt ist.

5. Leistungsübertragungsvorrichtung (1) nach einem der Ansprüche 1 bis 4,
**dadurch gekennzeichnet, dass**
das Hohlrad (5) auf der dem hydrodynamischen Wandler (2) abgewandten Seite des Planetengetriebes (4) zumindest mittelbar mit der Ausgangswelle (A) verbunden ist.

6. Leistungsübertragungsvorrichtung (1) nach einem der Ansprüche 1 bis 5,
**dadurch gekennzeichnet, dass**
das Pumpenrad (9) und/oder Turbinenrad (10) eine Schaufelradschale umfasst und die wenigstens eine Stellschaufel (13) und/oder wenigstens ein verstellbares Schaufelsegment (14) einer mehrgliedrigen Schaufel parallel zur Drehachse (R) des Schaufelrades in axialer Richtung verschiebbar in der Schaufelradschale gelagert ist.

7. Leistungsübertragungsvorrichtung (1) nach einem der Ansprüche 1 bis 6,
**dadurch gekennzeichnet, dass**
das Pumpenrad (9) und/oder Turbinenrad (10) eine Schaufelradschale umfasst und die wenigstens eine Stellschaufel (13) und/oder wenigstens ein verstellbares Schaufelsegment (14) einer mehrgliedrigen Schaufel drehbar um eine theoretische Achse in der Schaufelradschale gelagert ist.

8. Leistungsübertragungsvorrichtung (1) nach Anspruch 7,
**dadurch gekennzeichnet, dass**
die Stellvorrichtung (15) außerhalb des Arbeitsraumes und in axialer Richtung neben dem Schaufelrad, insbesondere Pumpenrad (9) oder Turbinenrad (10) angeordnet ist.

9. Leistungsübertragungsvorrichtung (1) nach einem der Ansprüche 1 bis8,
**dadurch gekennzeichnet, dass**
die Stellvorrichtung (15) derart ausgeführt und angeordnet ist, eine Mehrzahl Verstellschaufeln (13) und/oder verstellbare Schaufelsegmente (14) gemäß einer der nachfolgenden Möglichkeiten zu verstellen:
- einzeln
- in Gruppen
- alle gemeinsam

10. Leistungsübertragungsvorrichtung (1) nach einem der Ansprüche 1 bis 9,
**dadurch gekennzeichnet, dass**
die Stellvorrichtung (15) einen Stellantrieb (17) umfasst, der über einen Übertragungsmechanismus (19) mit der Stellschaufel (13) und/oder wenigstens einem verstellbaren Schaufelsegment (14) einer mehrgliedrigen Schaufel verbunden ist, wobei die über den Stellantrieb (17) aufgebrachte Verstellkraft (F) gemäß einer der nachfolgenden Möglichkeiten oder einer Kombination aus diesen in den Übertragungsmechanismus eingeleitet wird:
- in axialer Richtung bezogen auf die Rotationsachse (R) des Pumpenrades (9) und/oder Turbinenrades (10);
- in Umfangsrichtung um die Rotationsachse (R) des Pumpenrades (9) und/oder Turbinenrades (10).

11. Leistungsübertragungsvorrichtung (1) nach Anspruch 10,
**dadurch gekennzeichnet, dass**
der Stellantrieb (17) als ein Stellantrieb oder eine Kombination aus der nachfolgend genannten Gruppe von Stellantrieben ausgeführt ist:
- mechanischer Stellantrieb
- hydraulischer Stellantrieb
- pneumatischer Stellantrieb
- elektronischer Stellantrieb

12. Leistungsübertragungsvorrichtung (1) nach einem der Ansprüche 10 bis 11,
**dadurch gekennzeichnet, dass**
der einzelne Stellantrieb (17) Ringelemente (20, 21) aufweist, die jeweils koaxial zur Rotationsachse (R) des Pumpenrades (9) oder Turbinenrades (10) angeordnet sind, wobei ein erstes Ringelement (20) mit der wenigstens einen Stellschaufel (13) und/oder dem wenigstens einem verstellbaren Schaufelsegment (14) zur Übertragung einer Stellkraft oder eines Stellmomentes durch den Übertragungsmechanismus (19) verbunden ist und das erste Ringelement (20) relativ zu einem zweiten Ringelement (21) in Umfangsrichtung der Eingangswelle (E) verdrehbar ist, wobei vorzugsweise das erste und zweite Ringelement (20, 21) wenigstens zwei in Umfangsrichtung der Eingangswelle (E) angeordnete Druckkammern (22, 26) bilden, die für die Relativdrehung zwischen dem ersten und zweiten Ringelement (20, 21) jeweils mit Druck beaufschlagbar sind.

13. Leistungsübertragungsvorrichtung (1) nach einem der Ansprüche 10 bis 12
**dadurch gekennzeichnet, dass**
das der Übertragungsmechanismus (19) einen Verstellring (23) aufweist, der koaxial zur Eingangswelle (E) angeordnet und drehfest mit dem ersten Ringelement (20) verbunden ist, wobei der Verstellring (23) mit der wenigstens einen Stellschaufel (13) zur Übertragung einer Stellkraft (F) oder eines Stellmomentes gekoppelt ist und der Verstellring (23) gemäß einer der nachfolgend genannten Möglichkeiten ausgeführt ist:
- der Verstellring (23) wenigstens einen Nocken aufweist, der mit einem Kurbeltrieb, insbesondere einem radial angeordneten Hebelelement, zusammenwirkt, wobei der Kurbeltrieb mit der Stellschaufel (13) gekoppelt ist;
- der Verstellring (23) eine Außenverzahnung aufweist, die mit der Außenverzahnung eines Zapfens der Stellschaufel (13) kämmt, der sich parallel zur Mittelachse des Verstellringes (23) erstreckt.

14. Leistungsübertragungsvorrichtung (1) nach einem der Ansprüche 10 bis 13,
**dadurch gekennzeichnet, dass**
der Stellantrieb (17) zumindest einen in axialer Richtung verschiebbaren Stellkolben (28) aufweist, der koaxial oder exzentrisch zur Rotationsachse (R) des Pumpenrades (9) angeordnet sind, wobei der Stellkolben (28) mit der wenigstens einen Stellschaufel (13) und/oder dem wenigstens einem verstellbaren Schaufelsegment (14) zur Übertragung einer Stellkraft (F) oder eines Stellmomentes durch den Übertragungsmechanismus (19) verbunden ist und gegenüber dem Pumpenrad (9) in axialer Richtung verschiebbar ist und optional
der Übertragungsmechanismus (19) eine Umlenkeinrichtung zur Umlenkung der Axialbewegung des Stellkolbens (28) in eine Drehbewegung der Stellschaufel (13) und/oder des verstellbaren Schaufelsegmentes (14) um die Drehachse umfasst, wobei vorzugsweise
der Übertragungsmechanismus (19) einen Verstellring (23) umfasst, der über ein Gewinde mit einem Gewinde des Stellkolbens (28) in Eingriff steht, wobei eine Axialbewegung des Stellkolbens (28) in eine Verdrehbewegung am Stellring umgesetzt wird und der Verstellring im vom Stellkolben abgewandten Endbereich mit der Stellschaufel, insbesondere einem die Drehachse beschreibenden und die Verstellschaufel tragenden Element gekoppelt ist.

15. Leistungsübertragungsvorrichtung (1) nach einem der Ansprüche 1 bis 14,
**dadurch gekennzeichnet, dass**
das Antriebsaggregat (31) als Elektromotor ausgebildet ist.

16. Leistungsübertragungsvorrichtung (1) nach einem der Ansprüche 1 bis 15,
**dadurch gekennzeichnet, dass**
die Arbeitsmaschine (32) als Fördereinrichtung für ein Fluid, insbesondere als Verdichter, Pumpe oder Kreiselpumpe, ausgebildet ist.

17. Leistungsübertragungsvorrichtung (1) nach einem der Ansprüche 1 bis 16,
**dadurch gekennzeichnet, dass**
das Leitrad wenigstens eine, über eine Stellvorrichtung) betätigbare Stellschaufel und/oder wenigstens eine mehrgliedrige Schaufel mit zumindest einem verstellbaren Schaufelsegment umfasst.

## Claims

1. Device for force, in particular power, transmission (1) from an input shaft (E), which is connected at least indirectly to a drive unit, in particular a drive unit (31) with a constant speed, to an output shaft (A), which is connected at least indirectly to a work machine (32), in particular a work machine with a variable speed, in particular a power transmission device having
1.2 a hydrodynamic converter (2) comprising at least one pump wheel (9), one turbine wheel (10) and one stator (11) having blading, which form a working space that can be filled with operating medium;
1.3 a superposition gear unit (3) comprising at least one planetary gear unit (4), comprising the elements annulus (5), sun wheel (6) and a planet carrier (8) with a plurality of planet wheels (7) as elements of the planetary gear unit (4), wherein the pump wheel (9) and/or the input shaft (E) is/are coupled to a first element of the planetary gear unit (4), a second element of the planetary gear unit (4) is coupled at least indirectly to the at least one turbine wheel (10), and the output shaft (A) is connected to a third element of the planetary gear unit (4);
the blading (12) of the pump wheel (9) and/or turbine wheel (10) comprises at least one adjustable blade (13), which can be actuated by means of an actuating device (15), and/or at least one multi-element blade having at least one adjustable blade segment (14), **characterized in that** the first element of the planetary gear unit (4) is formed by the planet carrier (8), the second element of the planetary gear unit is formed by the sun wheel (6) and the third element of the planetary gear unit is formed by the annulus (5), and
the turbine wheel (10) is connected to the sun wheel (6) by a hollow shaft, and the input shaft (E), which passes through the hollow shaft, is connected to the planet carrier (8) on that side of the planetary gear unit (4) which faces away from the hydrodynamic converter (2).

2. Power transmission device (1) according to Claim 1,
**characterized in that**
the superposition gear unit (3) comprises precisely one planetary gear unit (4).

3. Power transmission device (1) according to one of Claims 1 or 2,
**characterized in that**
the hydrodynamic converter (2) is embodied as a corotating converter.

4. Power transmission device (1) according to one of Claims 1 or 2,
**characterized in that**
the hydrodynamic converter (2) is embodied as a counterrotating converter (16).

5. Power transmission device (1) according to one of Claims 1 to 4,
**characterized in that**
the annulus (5) is connected at least indirectly to the output shaft (A) on that side of the planetary gear unit (4) which faces away from the hydrodynamic converter (2).

6. Power transmission device (1) according to one of Claims 1 to 5,
**characterized in that**
the pump wheel (9) and/or turbine wheel (10) comprise/comprises a blade-wheel shell, and the at least one adjustable blade (13) and/or at least one adjustable blade segment (14) of a multi-element blade are/is mounted in the blade-wheel shell so as to be movable in the axial direction parallel to the axis of rotation (R) of the blade wheel.

7. Power transmission device (1) according to one of Claims 1 to 6,
**characterized in that**
the pump wheel (9) and/or turbine wheel (10) comprise/comprises a blade-wheel shell, and the at least one adjustable blade (13) and/or at least one adjustable blade segment (14) of a multi-element blade are/is mounted in the blade-wheel shell so as to be pivotable about a theoretical axis.

8. Power transmission device (1) according to Claim 7,
**characterized in that**
the actuating device (15) is arranged outside the working space and adjacent in the axial direction to the blade wheel, in particular pump wheel (9) or turbine wheel (10).

9. Power transmission device (1) according to one of Claims 1 to 8,
**characterized in that**
the actuating device (15) is embodied and arranged in such a way as to adjust a plurality of adjustable blades (13) and/or adjustable blade segments (14) in accordance with one of the following possibilities:
- individually
- in groups
- all together.

10. Power transmission device (1) according to one of Claims 1 to 9,
**characterized in that**
the actuating device (15) comprises an actuator (17), which is connected to the adjustable blade (13) and/or at least one adjustable blade segment (14) of a multi-element blade by a transmission mechanism (19), wherein the adjusting force (F) applied by means of the actuator (17) is introduced into the transmission mechanism in accordance with one of the following possibilities or with a combination of these:
- in the axial direction, based on the axis of rotation (R) of the pump wheel (9) and/or turbine wheel (10);
- in the circumferential direction, about the axis of rotation (R) of the pump wheel (9) and/or turbine wheel (10).

11. Power transmission device (1) according to Claim 10,
**characterized in that**
the actuator (17) is embodied as a single actuator or as a combination taken from the group of actuators which is mentioned below:
- mechanical actuator
- hydraulic actuator
- pneumatic actuator
- electronic actuator.

12. Power transmission device (1) according to one of Claims 10 to 11,
**characterized in that**
the single actuator (17) has ring elements (20, 21), which are each arranged coaxially with respect to the axis of rotation (R) of the pump wheel (9) or turbine wheel (10), wherein a first ring element (20) is connected to the at least one adjustable blade (13) and/or at least one adjustable blade segment (14) to transmit an actuating force or an actuating torque by means of the transmission mechanism (19), and the first ring element (20) can be turned relative to a second ring element (21) in the circumferential direction of the input shaft (E), wherein preferably the first and the second ring element (20, 21) form at least two pressure chambers (22, 26), which are arranged in the circumferential direction of the input shaft (E) and can each be subjected to pressure for the relative rotation between the first and second ring element (20, 21).

13. Power transmission device (1) according to one of Claims 10 to 12,
**characterized in that**
the transmission mechanism (19) has an adjusting ring (23), which is arranged coaxially with respect to the input shaft (E) and is connected for conjoint rotation to the first ring element (20), wherein the adjusting ring (23) is coupled to the at least one adjustable blade (13) for the transmission of an actuating force (F) or of an actuating torque, and the adjusting ring (23) is embodied in accordance with one of the possibilities mentioned below:
- the adjusting ring (23) has at least one cam, which interacts with a crank mechanism, in particular with a radially arranged lever element, wherein the crank mechanism is coupled to the adjustable blade (13);
- the adjusting ring (23) has external toothing, which meshes with the external toothing of a journal of the adjustable blade (13), which extends parallel to the central axis of the adjusting ring (23).

14. Power transmission device (1) according to one of Claims 10 to 13,
**characterized in that**
the actuator (17) has at least one actuating piston (28), which can be moved in the axial direction and is arranged coaxially or eccentrically with respect to the axis of rotation (R) of the pump wheel (9), wherein the actuating piston (28) is connected to the at least one adjustable blade (13) and/or the at least one adjustable blade segment (14) in order to transmit an actuating force (F) or an actuating torque by means of the transmission mechanism (19) and can be moved in the axial direction relative to the pump wheel (9), and optionally the transmission mechanism (19) comprises a deflection device for deflecting the axial motion of the actuating piston (28) into a pivoting motion of the adjustable blade (13) and/or of the adjustable blade segment (14) about the pivoting axis, wherein preferably
the transmission mechanism (19) comprises an adjusting ring (23), which is in engagement with a thread of the actuating piston (28) by means of a thread, wherein an axial motion of the actuating piston (28) is converted into a turning motion at the adjusting ring, and the adjusting ring is coupled in the end region remote from the actuating piston to the adjustable blade, in particular to an element which describes the pivoting axis and carries the adjustable blade.

15. Power transmission device (1) according to one of Claims 1 to 14,
**characterized in that**
the drive unit (31) is designed as an electric motor.

16. Power transmission device (1) according to one of Claims 1 to 15,
**characterized in that**
the work machine (32) is designed as a delivery device for a fluid, in particular as a compressor, pump or centrifugal pump.

17. Power transmission device (1) according to one of Claims 1 to 16,
**characterized in that**
the stator comprises at least one adjustable blade, which can be actuated by means of an actuating device, and/or at least one multi-element blade having at least one adjustable blade segment.

## Revendications

1. Dispositif (1) de transmission de force, notamment de puissance d'un arbre d'entrée (E) relié au moins indirectement à un groupe d'entraînement, notamment un groupe d'entraînement (31) à vitesse de rotation constante, à un arbre de sortie (A) relié au moins indirectement à une machine de travail (32), notamment une machine de travail à vitesse de rotation variable, notamment dispositif de transmission de puissance comprenant
1.2 un convertisseur hydrodynamique (2), comportant au moins respectivement une roue de pompe (9), une roue de turbine (10) et une roue de distribution (11) possédant un aubage, lesquelles forment un espace de travail qui peut être rempli d'un fluide de service ;
1.3 un engrenage différentiel (3) comprenant au moins un engrenage planétaire (4), comprenant les éléments couronne de train planétaire (5), roue solaire (6) ainsi qu'une cage de train planétaire (8) munie de plusieurs satellites (7) en tant qu'éléments de l'engrenage planétaire (4), la roue de pompe (9) et/ou l'arbre d'entrée (E) étant couplé avec un premier élément de l'engrenage planétaire (4), un deuxième élément de l'engrenage planétaire (4) étant couplé au moins indirectement avec l'au moins une roue de turbine (10) et l'arbre de sortie (A) étant relié avec un troisième élément de l'engrenage planétaire (4) ;
l'aubage (12) de la roue de pompe (9) et/ou de la roue de turbine (10) comportant au moins une aube de réglage (13) qui peut être actionnée par le biais d'un dispositif de réglage (15) et/ou au moins une aube en plusieurs parties avec au moins un segment d'aube (14) positionnable,
**caractérisé en ce que**
le premier élément de l'engrenage planétaire (4) est formé par la cage de train planétaire (8), le deuxième élément de l'engrenage planétaire par la roue solaire (6) et le troisième élément de l'engrenage planétaire par la couronne de train planétaire (5) et la roue de turbine (10) est reliée à la roue solaire (6) par le biais d'un arbre creux et l'arbre d'entrée (E) qui s'étend à travers l'arbre creux est relié à la cage de train planétaire (8) du côté de l'engrenage planétaire (4) à l'opposé du convertisseur hydrodynamique (2).

2. Dispositif de transmission de puissance (1) selon la revendication 1, **caractérisé en ce que** l'engrenage différentiel (3) comporte exactement un engrenage planétaire (4).

3. Dispositif de transmission de puissance (1) selon l'une des revendications 1 et 2, **caractérisé en ce que** le convertisseur hydrodynamique (2) est réalisé sous la forme d'un convertisseur synchrone.

4. Dispositif de transmission de puissance (1) selon l'une des revendications 1 et 2, **caractérisé en ce que** le convertisseur hydrodynamique (2) est réalisé sous la forme d'un convertisseur contrarotatif (16).

5. Dispositif de transmission de puissance (1) selon l'une des revendications 1 à 4, **caractérisé en ce que** la couronne de train planétaire (5) est reliée au moins indirectement à l'arbre de sortie (A) du côté de l'engrenage planétaire (4) à l'opposé du convertisseur hydrodynamique (2).

6. Dispositif de transmission de puissance (1) selon l'une des revendications 1 à 5, **caractérisé en ce que** la roue de pompe (9) et/ou la roue de turbine (10) comporte une enveloppe de roue à aubes et l'au moins une aube de réglage (13) et/ou au moins un segment d'aube (14) positionnable d'une aube en plusieurs parties est monté parallèlement à l'axe de rotation (R) de la roue à aubes dans la direction axiale de manière à pouvoir coulisser dans l'enveloppe de roue à aubes.

7. Dispositif de transmission de puissance (1) selon l'une des revendications 1 à 6, **caractérisé en ce que** la roue de pompe (9) et/ou la roue de turbine (10) comporte une enveloppe de roue à aubes et l'au moins une aube de réglage (13) et/ou au moins un segment d'aube (14) positionnable d'une aube en plusieurs parties est monté à rotation autour d'un axe théorique dans l'enveloppe de roue à aubes.

8. Dispositif de transmission de puissance (1) selon la revendication 7, **caractérisé en ce que** le dispositif de réglage (15) est disposé à l'extérieur de l'espace de travail et à côté de la roue à aubes, notamment de la roue de pompe (9) ou de la roue de turbine (10), dans la direction axiale.

9. Dispositif de transmission de puissance (1) selon l'une des revendications 1 à 8, **caractérisé en ce que** le dispositif de réglage (15) est exécuté et disposé de manière à positionner une pluralité d'aubes positionnables (13) et/ou de segments d'aube (14) positionnables selon l'une des possibilités suivantes :
- individuellement
- par groupe
- tous ensemble.

10. Dispositif de transmission de puissance (1) selon l'une des revendications 1 à 9, **caractérisé en ce que** le dispositif de réglage (15) comporte un servomécanisme (17) qui est relié à l'aube de réglage (13) et/ou au moins à l'un des segments d'aube (14) positionnables d'une aube en plusieurs parties par le biais d'un mécanisme de transmission (19), la force de positionnement (F) appliquée par le biais du servomécanisme (17) étant introduite dans le mécanisme de transmission selon l'une des possibilités suivantes ou une combinaison de celles-ci :
- dans la direction axiale en référence à l'axe de rotation (R) de la roue de pompe (9) et/ou de la roue de turbine (10) ;
- dans la direction périphérique autour de l'axe de rotation (R) de la roue de pompe (9) et/ou de la roue de turbine (10).

11. Dispositif de transmission de puissance (1) selon la revendication 10, **caractérisé en ce que** le servomécanisme (17) est réalisé sous la forme d'un servomécanisme ou d'une combinaison du groupe de servomécanismes mentionné ci-après :
- servomécanisme mécanique
- servomécanisme hydraulique
- servomécanisme pneumatique
- servomécanisme électronique.

12. Dispositif de transmission de puissance (1) selon l'une des revendications 10 et 11, **caractérisé en ce que** le servomécanisme (17) individuel possède des éléments annulaires (20, 21) qui sont respectivement disposés de manière coaxiale par rapport à l'axe de rotation (R) de la roue de pompe (9) ou de la roue de turbine (10), un premier élément annulaire (20) étant relié à l'au moins une aube de réglage (13) et/ou à l'au moins un segment d'aube (14) positionnable pour la transmission d'une force de réglage ou d'un moment de réglage par le mécanisme de transmission (19) et le premier élément annulaire (20) pouvant tourner par rapport à un deuxième élément annulaire (21) dans la direction périphérique de l'arbre d'entrée (E), le premier et le deuxième élément annulaire (20, 21) formant de préférence au moins deux chambres de pression (22, 26) disposées dans la direction périphérique de l'arbre d'entrée (E), lesquelles peuvent respectivement être chargées en pression pour la rotation relative entre le premier et le deuxième élément annulaire (20, 21).

13. Dispositif de transmission de puissance (1) selon l'une des revendications 10 à 12, **caractérisé en ce que** le mécanisme de transmission (19) possède un anneau de positionnement (23) qui est disposé de manière coaxiale par rapport à l'arbre d'entrée (E) et qui est relié en rotation solidaire avec le premier élément annulaire (20), l'anneau de positionnement (23) étant couplé avec l'au moins une aube de réglage (13) pour la transmission d'une force de réglage (F) ou d'un moment de réglage et l'anneau de positionnement (23) étant réalisé conformément à l'une des possibilités mentionnées ci-après :
- l'anneau de positionnement (23) possède au moins une came qui coopère avec une transmission à manivelle, notamment un élément formant levier disposé dans le sens radial, la transmission à manivelle étant couplée avec l'aube de réglage (13) ;
- l'anneau de positionnement (23) possède une denture extérieure qui s'engrène avec la denture externe d'un tenon de l'aube de réglage (13), lequel s'étend parallèlement à l'axe central de l'anneau de positionnement (23).

14. Dispositif de transmission de puissance (1) selon l'une des revendications 10 à 13, **caractérisé en ce que** le servomécanisme (17) possède au moins un piston de commande (28) qui peut coulisser dans la direction axiale, lequel est disposé de manière coaxiale ou excentrique par rapport à l'axe de rotation (R) de la roue de pompe (9), le piston de commande (28) étant relié à l'au moins une aube de réglage (13) et/ou à l'au moins un segment d'aube (14) positionnable pour la transmission d'une force de réglage (F) ou d'un moment de réglage par le mécanisme de transmission (19) et pouvant coulisser dans la direction axiale par rapport à la roue de pompe (9) et, en option
le mécanisme de transmission (19) comporte un système de déviation destiné à dévier le mouvement axial du piston de commande (28) dans un mouvement de rotation de l'aube de réglage (13) et/ou du segment d'aube (14) positionnable autour de l'axe de rotation,
le mécanisme de transmission (19) comportant de préférence un anneau de positionnement (23) qui est en prise avec un filetage du piston de commande (28) par le biais d'un filetage, un mouvement axial du piston de commande (28) étant converti en un mouvement de torsion au niveau de l'anneau de réglage et l'anneau de positionnement étant couplé avec l'aube de réglage dans la zone d'extrémité à l'opposé du piston de commande, notamment avec un élément qui décrit l'axe de rotation et qui supporte l'aube positionnable.

15. Dispositif de transmission de puissance (1) selon l'une des revendications 1 à 14, **caractérisé en ce que** le groupe d'entraînement (31) est réalisé sous la forme d'un moteur électrique.

16. Dispositif de transmission de puissance (1) selon l'une des revendications 1 à 15, **caractérisé en ce que** la machine de travail (32) est réalisée sous la forme d'un système de refoulement pour un fluide, notamment sous la forme d'un compresseur, d'une pompe ou d'une pompe centrifuge.

17. Dispositif de transmission de puissance (1) selon l'une des revendications 1 à 16, **caractérisé en ce que** la roue de distribution comporte au moins une aube de réglage qui peut être actionnée par le biais d'un dispositif de réglage et/ou au moins une aube en plusieurs parties comprenant au moins un segment d'aube positionnable.
